(19) Europäisches Patentamt
European Patent Office
Office européen des brevets

(11) EP 4 629 733 A1

(12) EUROPEAN PATENT APPLICATION

(43) Date of publication:
08.10.2025 Bulletin 2025/41

(51) International Patent Classification (IPC):
H04W 74/00 (2009.01)    H04L 5/14 (2006.01)
H04W 74/0833 (2024.01)

(21) Application number: 25165025.5

(22) Date of filing: 20.03.2025

(52) Cooperative Patent Classification (CPC):
H04W 74/006; H04L 5/14; H04W 74/0833

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.04.2024 US 202463573272 P

(71) Applicant: Lenovo (Singapore) Pte. Ltd.
New Tech Park 556741 (SG)

(72) Inventor: ARDAH, Khaled Nafez Rauf
98693 Ilmenau (DE)

(74) Representative: Openshaw & Co.
8 Castle Street
Farnham, Surrey GU9 7HR (GB)

(54) **APPARATUS AND METHOD INCLUDING RANDOM ACCESS CHANNEL CONFIGURATIONS WHICH SUPPORT SUBBAND FULL DUPLEX**

(57) Various aspects of the present disclosure relate to receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. The physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. A physical RACH preamble is transmitted on a selected RO, which occurs in the non-overlapping uplink frequency resource portions of the physical RACH slot.

1100

```
Start
```

1102 — Receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion

1104 — Wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot

1106 — Transmitting a physical RACH preamble on a selected RO, which occurs in the non-overlapping uplink frequency resource portions of the physical RACH slot

FIG. 11

EP 4 629 733 A1

**Description**

TECHNICAL FIELD

The present disclosure relates to wireless communications, and more specifically to an apparatus and method including random access channel (RACH) configurations, which support subband full duplex (SBFD).

BACKGROUND

A wireless communications system may include one or multiple network communication devices, such as base stations, which may support wireless communications for one or multiple user communication devices, which may be otherwise known as user equipment (UE), user devices, or other suitable terminology. The wireless communications system may support wireless communications with the one or multiple user communication devices by utilizing resources, such as time resources (e.g., symbols, slots, subframes, frames, or the like) and/or frequency resources (e.g., subcarriers, carriers, or the like), of the wireless communication system. Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

SUMMARY

In some implementations of the method and apparatuses, described herein, a random access channel (RACH) configuration message is received, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. The physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. A physical RACH preamble is transmitted on a selected RO, which occurs in the non-overlapping uplink frequency resource portions of the physical RACH slot.

In some implementations of the method and apparatuses described herein, a random access channel (RACH) configuration message can be formulated, where the RACH configuration message can include at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. The physical RACH can have multiple associated Synchronization Signal/physical broadcast channel Block (SSB) indexes, where the first RACH configuration can define at least one RACH occasion (RO) corresponding to each of the associated SSB indexes, which occurs in the non-overlapping uplink frequency resource portions of the physical RACH slot. The random access channel (RACH) configuration message can then be transmitted to a user equipment (UE); and a physical RACH preamble can be received on a selected RO from the UE, which occurs in the non-overlapping uplink frequency resource portions of the physical RACH slot.

BRIEF DESCRIPTION OF THE DRAWINGS

In order to describe the manner in which advantages and features of the disclosure can be obtained, a description of the disclosure is rendered by reference to specific embodiments thereof which are illustrated in the appended drawings. These drawings depict only example embodiments of the disclosure and are not therefore to be considered to be limiting of its scope. The drawings may have been simplified for clarity and are not necessarily drawn to scale.

FIG. 1 illustrates an example of a wireless communications system in accordance with aspects of the present disclosure.

FIG. 2 illustrates a table providing an exemplary set of parameters for random access configurations for frequency range 1 (FR1) and unpaired spectrum, which identify time resources when random access preambles can be transmitted.

FIG. 3 illustrates an exemplary mapping of the physical random access channel (PRACH) Configuration index 118, which highlights at least one possible set of valid RACH occasions (RO) in uplink (UL) slots.

FIG. 4 illustrates an exemplary SSB-to-RO mapping for different ssb-perRACH-Occasion (N) values.

FIG. 5 illustrates a set of exemplary reconfiguration examples from a DDDDU legacy time division duplexing (TDD) slot configuration into three DXXXU subband full duplex (SBFD) slot configurations.

FIG. 6 illustrate an example of separate ssb-perRACH-OccasionAndCB-PreamblesPerSSB values including one for UL-only symbols and one for SBFD UL subband symbols, in accordance with at least one aspect of the present disclosure.

FIG. 7 illustrate a pair of exemplary valid ROs indexing options, assuming msg1-FDM = 4, in accordance with at least one aspect of the present disclosure.

FIG. 8 illustrates an example of a user equipment (UE) in accordance with aspects of the present disclosure.

FIG. 9 illustrates an example of a processor in accordance with aspects of the present disclosure.

FIG. 10 illustrates an example of a network equipment (NE) in accordance with aspects of the present disclosure.

FIG. 11 illustrates a flowchart of a method performed by a UE in accordance with aspects of the present disclosure.

FIG. 12 illustrates a flowchart of a method performed by a NE in accordance with aspects of the present disclosure.

## DETAILED DESCRIPTION

Time division duplex (TDD) is widely used in commercial New Radio (NR) deployments, which splits the time resources (symbols and slots) between downlink (DL) and uplink (UL) communications. However, the limited allocation of time resources for UL communications in TDD can result in reduced UL coverage, reduced UL capacity, and increased UL latency. As a possible enhancement to TDD-based systems, non-overlapping subband full duplex (SBFD) have been introduced in Third Generation Partnership Project (3GPP) Rel-18 and in Rel-19, which allows simultaneous DL and UL communications at the same time by splitting the frequency resources of a time symbol/slot into non-overlapping DL and UL subbands, wherein each subband comprises one or more of resource-blocks (RBs).

Random access (RA) is an important part of wireless communication systems, as it plays a significant role in establishing and reestablishing a connection between a device and a network. In TDD-based systems, a device can utilize configured time-frequency resource occasions, called RACH Occasions (ROs) to transmit a preamble, i.e., for initiating the RA procedure. However, since ROs are configured only on UL slots, RA procedure can sometimes suffer from long latency and short coverage in cases where the configured TDD UL-DL pattern has few UL slots. Therefore, allowing RA to occur on SBFD UL subband can sometimes be used to reduce RA latency and increase RA coverage. However, current RA configuration messages are designed considering UL slots, and therefore enhancements may be beneficial for making them applicable as well for SBFD UL subband.

Aspects of the present disclosure are described in the context of a wireless communications system.

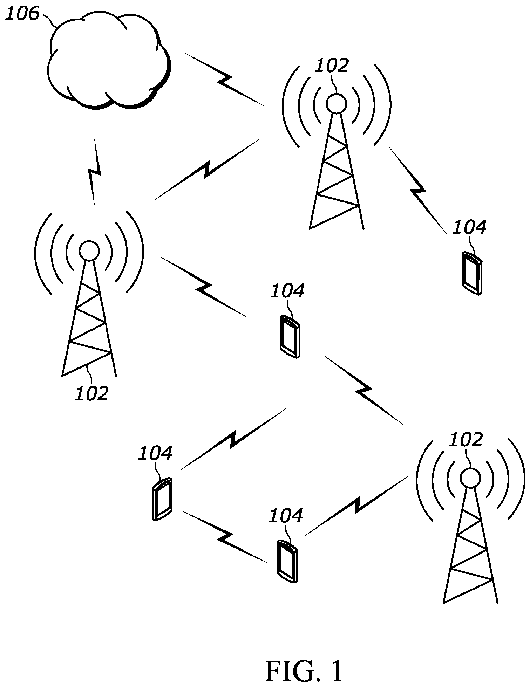

FIG. 1 illustrates an example of a wireless communications system 100 in accordance with aspects of the present disclosure. The wireless communications system 100 may include one or more NE 102, one or more device 104, and a network 106. The wireless communications system 100 may support various radio access technologies. In some implementations, the wireless communications system 100 may be a fourth generation (4G) network, such as a long-term evolution (LTE) network or an LTE-Advanced (LTE-A) network. In some other implementations, the wireless communications system 100 may be a new radio (NR) network, such as a fifth generation (5G) network, a 5G-Advanced (5G-A) network, or a 5G ultrawideband (5G-UWB) network. In other implementations, the wireless communications system 100 may be one of, or a combination of, a 4G network, a 5G network, a Third Generation Partnership Project (3GPP)-based network, one or more of a future generation network (6G, etc.), and/or one or more of any other suitable radio access technology, wireless access technology, and/or wired access technology, including Institute of Electrical and Electronics Engineers (IEEE) 802.11 (Wi-Fi), IEEE 802.16 (WiMAX), and/or IEEE 802.20, a Wireless Local Area Network (WLAN), a satellite communication network, a high-altitude platform network, the Internet, and/or other communication networks. The wireless communications system 100 may support radio access technologies beyond 5G, for example, 6G. Additionally, the wireless communications system 100 may support various multiple access technologies, such as time division multiple access (TDMA), frequency division multiple access (FDMA), code division multiple access (CDMA), orthogonal frequency division multiple access (OFDMA), etc.

The one or more NE 102 may be dispersed throughout a geographic region to form the wireless communications system 100. One or more of the NE 102 described herein may be or include or may be referred to as a network node, a base station, a network element, a network function, a network entity, a radio access network (RAN), a NodeB, an eNodeB (eNB), a next-generation NodeB (gNB), an access point, a transmission-reception point (TRP), or other suitable terminology. An NE 102 and a UE 104 may communicate via a communication link, which may be a wireless or wired connection. For example, an NE 102 and a UE 104 may perform wireless communication (e.g., receive signaling, transmit signaling) over a Uu interface.

An NE 102 may provide a geographic coverage area for which the NE 102 may support services for one or more UEs 104 within the geographic coverage area. For example, an NE 102 and a UE 104 may support wireless communication of signals related to services (e.g., voice, video, packet data, messaging, broadcast, etc.) according to one or multiple radio access technologies. In some implementations, an NE 102 may be moveable, for example, a satellite associated with a non-terrestrial network (NTN). In some implementations, different geographic coverage areas associated with the same or different radio access technologies may overlap, but the different geographic coverage areas may be associated with different NEs 102.

The one or more UE 104 may be dispersed throughout a geographic region of the wireless communications system 100. A UE 104 may include or may be referred to as a remote unit, a mobile device, a wireless device, a remote device, a subscriber device, a transmitter device, a receiver device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or Machine-Type Communication (MTC) device, among other examples.

A UE 104 may be able to support wireless communication directly with other UEs 104 over a communication link. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link may be referred to as a sidelink. For example, a UE 104 may support wireless communication directly with another UE 104 over a PC5 interface.

An NE 102 may support communications with the network 106, or with another NE 102, or both. For example, an NE 102 may interface with another NE 102 or the network 106 through one or more backhaul links (e.g., S1, N2, N2, or network interface). In some implementations, the NE 102 may communicate with each other directly. In some other implementations, the NE 102 may communicate with each other or indirectly (e.g., via the network 106). In some implementations, one or more NE 102 may include subcomponents, such as an access network entity, which may be an example of an access node controller (ANC). An ANC may communicate with the one or more UEs 104 through one or more other access network transmission entities, which may be referred to as a radio heads, smart radio heads, or TRPs.

The network 106 may support user authentication, access authorization, tracking, connectivity, and other access, routing, or mobility functions. The network 106 may be an evolved packet core (EPC), or a 5GC, which may include a control plane entity that manages access and mobility (e.g., a Mobility Management Entity (MME), an Access and Mobility Management Function (AMF)) and a user plane entity that routes packets or interconnects to external networks (e.g., a Serving Gateway (S-GW), a Packet Data Network (PDN) Gateway (P-GW), or a User Plane Function (UPF)). In some implementations, the control plane entity may manage Non-Access Stratum (NAS) functions, such as mobility, authentication, and bearer management (e.g., data bearers, signal bearers, etc.) for the one or more UEs 104 served by the one or more NE 102 associated with the network 106.

The network 106 may communicate with a packet data network over one or more backhaul links (e.g., via an S1, N2, N2, or another network interface). The packet data network may include an application server. In some implementations, one or more UEs 104 may communicate with the application server. A UE 104 may establish a session (e.g., a Protocol Data Unit (PDU) session, or the like) with the network 106 via an NE 102. The network 106 may route traffic (e.g., control information, data, and the like) between the UE 104 and the application server using the established session (e.g., the established PDU session). The PDU session may be an example of a logical connection between the UE 104 and the network 106 (e.g., one or more network functions of the network 106).

In the wireless communications system 100, the NEs 102 and the UEs 104 may use resources of the wireless communications system 100 (e.g., time resources (e.g., symbols, slots, subframes, frames, or the like) or frequency resources (e.g., subcarriers, carriers)) to perform various operations (e.g., wireless communications). In some implementations, the NEs 102 and the UEs 104 may support different resource structures. For example, the NEs 102 and the UEs 104 may support different frame structures. In some implementations, such as in 4G, the NEs 102 and the UEs 104 may support a single frame structure. In some other implementations, such as in 5G and among other suitable radio access technologies, the NEs 102 and the UEs 104 may support various frame structures (i.e., multiple frame structures). The NEs 102 and the UEs 104 may support various frame structures based on one or more numerologies.

One or more numerologies may be supported in the wireless communications system 100, and a numerology may include a subcarrier spacing and a cyclic prefix. A first numerology (e.g., $\mu=0$) may be associated with a first subcarrier spacing (e.g., 15 kHz) and a normal cyclic prefix. In some implementations, the first numerology (e.g., $\mu=0$) associated with

the first subcarrier spacing (e.g., 15 kHz) may utilize one slot per subframe. A second numerology (e.g., $\mu$=1) may be associated with a second subcarrier spacing (e.g., 30 kHz) and a normal cyclic prefix. A third numerology (e.g., $\mu$=2) may be associated with a third subcarrier spacing (e.g., 60 kHz) and a normal cyclic prefix or an extended cyclic prefix. A fourth numerology (e.g., $\mu$=3) may be associated with a fourth subcarrier spacing (e.g., 120 kHz) and a normal cyclic prefix. A fifth numerology (e.g., $\mu$=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. The number of slots in each subframe may also depend on the one or more numerologies supported in the wireless communications system 100. For instance, the first, second, third, fourth, and fifth numerologies (i.e., $\mu$=0, $\mu$=1, $\mu$=2, $\mu$=3, $\mu$=4) associated with respective subcarrier spacings of 15 kHz, 30 kHz, 60 kHz, 120 kHz, and 240 kHz may utilize a single slot per subframe, two slots per subframe, four slots per subframe, eight slots per subframe, and 16 slots per subframe, respectively. Each slot may include a number (e.g., quantity) of symbols (e.g., OFDM symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., $\mu$=0) associated with a first subcarrier spacing (e.g., 15 kHz) may be used interchangeably between subframes and slots.

In the wireless communications system 100, an Electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the NEs 102 and the UE 104 may perform wireless communications over one or more of the operating frequency bands. In some implementations, FR1 may be used by the NEs 102 and the UEs 104, among other equipment or devices for cellular communications traffic (e.g., control information, data, etc.). For example, communication traffic can include user data, control information, and other communication traffic. The control information can be used for establishing and controlling communications that transmit and receive the user data, such as in packets, in physical shared channels, in data regions of subframes, and in other communications. In some implementations, FR2 may be used by the NEs 102 and the UEs 104, among other equipment or devices for short-range, high data rate capabilities.

FR1 may be associated with one or multiple numerologies (e.g., at least three numerologies). For example, FR1 may be associated with a first numerology (e.g., $\mu$=0), which includes 15 kHz subcarrier spacing; a second numerology (e.g., $\mu$=1), which includes 30 kHz subcarrier spacing; and a third numerology (e.g., $\mu$=2), which includes 60 kHz subcarrier spacing. FR2 may be associated with one or multiple numerologies (e.g., at least 2 numerologies). For example, FR2 may be associated with a third numerology (e.g., $\mu$=2), which includes 60 kHz subcarrier spacing; and a fourth numerology (e.g., $\mu$=3), which includes 120 kHz subcarrier spacing.

In the 3GPP standard's meeting for radio layer 1 (physical layer) RAN1, meeting #116, several agreements were made. These included, that for random access operation for SBFD-aware UEs in RRC CONNECTED state, at least the following options are to be considered:

- Option 1: Use one single RACH configuration with possible enhancement

    o The ROs within UL subband in SBFD symbols can be valid for SBFD-aware UE
    o for further study (FFS): Further details

- Option 2: Use two separate RACH configurations, including one legacy RACH configuration and one additional RACH configuration

    o The ROs within UL subband in SBFD symbols configured by the additional RACH configuration can be valid for SBFD-aware UE.
    o FFS: Further details

From this the following conclusion was drawn, namely that if PRACH is allowed in SBFD symbols for SBFD-aware UEs in radio resource control (RRC)_IDLE/INACTIVE mode, RAN1 observed the following:

- The benefits include at least one or more of the following:

  o reduced random access latency
  o reduced PRACH collision probability or allowing more contiguous frequency resources for PUSCH in UL slots
  o improved coverage of PRACH with sparse UL resources
  o increased cell range of PRACH with sparse UL resources

- PRACH transmissions in UL subband in SBFD symbols may cause UE-to-UE cross link interference (CLI) (similar to the case of RRC connected mode UEs) for some deployment scenarios. Initial studies based on two companies' evaluation results, the DL performance degradation due to UE-to-UE CLI caused by PRACH transmission in SBFD symbols is not significant for indoor office scenario and Urban Macro scenario.

The agreements further included for SBFD aware UEs in RRC CONNECTED state, at least PRACH without repetition is supported in SBFD symbols.

- FFS PRACH repetition in SBFD symbols.
- FFS PRACH repetition across SBFD symbols and non-SBFDs symbols.

The agreements still further included for SBFD-aware UEs in RRC CONNECTED state, further study the following two options:

- Option 1: a valid RO can only be on SBFD symbols or on non-SBFD symbols

  o a configured RO across SBFD and non-SBFD symbols in the same slot or across slots is invalid

- Option 2: a valid RO can be across SBFD and non-SBFD symbols in the same slot or across slots

RAN1 to leverage the study in Rel-18 as baseline.

From 3GPP technical specification (TS) 38.211 V18.1.0 (2023-12), and more specifically, the section entitled mapping to physical resources (section 6.3.3.2), it was identified that the preamble sequence shall be mapped to physical resources according to

$$a_k^{(p,\mathrm{RA})} = \beta_{\mathrm{PRACH}} y_{u,v}(k)$$

$$k = 0,1,...,L_{\mathrm{RA}} - 1$$

where $\beta_{\mathrm{PRACH}}$ is an amplitude scaling factor in order to conform to the transmit power specified in [TS 38.213], and $p = 4000$ is the antenna port. Baseband signal generation shall be done according to clause 5.3 using the parameters in Table 6.3.3.1-1 or Table 6.3.3.1-2 with $\overline{k}$ given by Table 6.3.3.2-1.

Random access preambles can only be transmitted in the time resources obtained from Tables 6.3.3.2-2 to 6.3.3.2-4 and depends on FR1 or FR2 and the spectrum type as defined in [TS 38.104]. The PRACH configuration index in Tables 6.3.3.2-2 to 6.3.3.2-4 is

- for Table 6.3.3.2-3 given by the higher-layer parameter *prach-ConfigurationIndex,* or by *msgA-PRACH-ConfigurationIndex* if configured; and

- for Tables 6.3.3.2-2 and 6.3.3.2-4 given by the higher-layer parameter *prach-ConfigurationIndex,* or by *msgA-PRACH-ConfigurationIndex* if configured.

This same section further provides, that random access preambles can only be transmitted in the frequency resources given by either the higher-layer parameter *msg1-FrequencyStart* or *msgA-RO-FrequencyStart* if configured as described in clause 8.1 of [TS 38.213]. The PRACH frequency resources $n_{\mathrm{RA}} \in \{0,1, ... , M - 1\}$, where M equals the higher-layer parameter *msg1-FDM* or *msgA-RO-FDM* if configured, are numbered in increasing order within the initial uplink bandwidth part during initial access, starting from the lowest frequency. Otherwise, $n_{\mathrm{RA}}$ are numbered in increasing order within the active uplink bandwidth part, starting from the lowest frequency.

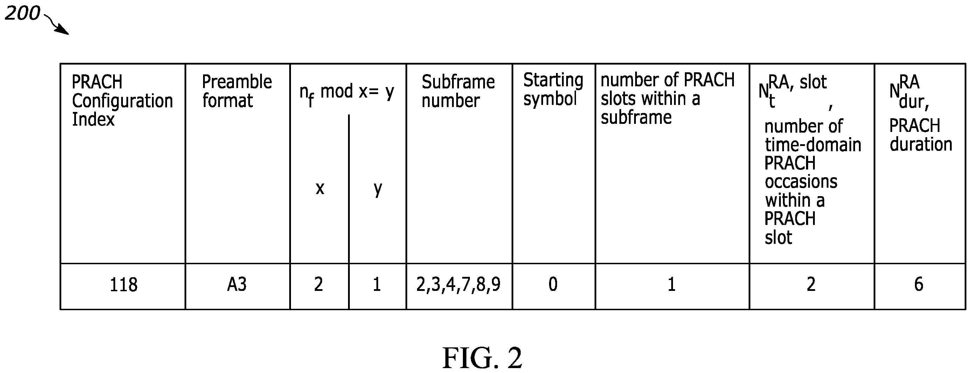

Still further, one of the referenced tables, namely Table 6.3.3.2-3 from 3GPP TS 38.211, corresponding to Random access configurations for FR1 and unpaired spectrum, is illustrated in FIG. 2. More specifically, this table 200 includes the random access configuration for PRACH Configuration Index 118 including the associated parameters and their respective values.

In terms of information element (IE) for RACH-ConfigGeneric in 3GGP TS 38.331, V16.0.0, is defined as follows:
*RACH-ConfigGeneric* information element

```
-- ASN1START
-- TAG-RACH-CONFIGGENERIC-START

RACH-ConfigGeneric ::=          SEQUENCE {
    prach-ConfigurationIndex     INTEGER (0..255),
    msg1-FDM                         ENUMERATED {one, two, four, eight},
    msg1-FrequencyStart          INTEGER (0..maxNrofPhysicalResourceBlocks-1),
    ...
}

-- TAG-RACH-CONFIGGENERIC-STOP
-- ASN1STOP
```

| **RACH-ConfigGeneric** field descriptions |
|---|
| **msg1-FDM** <br> The number of PRACH transmission occasions FDMed in one time instance. (see TS 38.211 [16], clause 6.3.3.2). |
| **msg1-FrequencyStart** <br> Offset of lowest PRACH transmission occasion in frequency domain with respective to PRB 0. The value is configured so that the corresponding RACH resource is entirely within the bandwidth of the UL BWP. (see TS 38.211 [16], clause 6.3.3.2). |
| **prach-ConfigurationIndex** <br> PRACH configuration index. For *prach-ConfigurationIndex* configured under *beamFailureRecoveryConfig,* the *prach-ConfigurationIndex* can only correspond to the short preamble format, (see TS 38.211 [16], clause 6.3.3.2). If the field *prach-Configurationindex-v1610* is present, the UE shall ignore the value provided in *prach-ConfigurationIndex* (without suffix). |

Further IE RACH-ConfigCommon Information Element is defined as follows:
*RACH-ConfigCommon* information element

```
-- ASN1START
-- TAG-RACH-CONFIGCOMMON-START

RACH-ConfigCommon ::=          SEQUENCE {
    rach-ConfigGeneric           RACH-ConfigGeneric,
    totalNumberOfRA-Preambles    INTEGER (1..63)                OPTIONAL,      -- Need S
    ssb-perRACH-OccasionAndCB    PreamblesPerSSB   CHOICE {
        oneEighth         ENUMERATED {n4,n8,n12,n16,n20,n24,n28,n32,n36,n40,n44,n48,n52,n56,n60,n64},
        oneFourth         ENUMERATED {n4,n8,n12,n16,n20,n24,n28,n32,n36,n40,n44,n48,n52,n56,n60,n64},
        oneHalf           ENUMERATED {n4,n8,n12,n16,n20,n24,n28,n32,n36,n40,n44,n48,n52,n56,n60,n64},
        one               ENUMERATED {n4,n8,n12,n16,n20,n24,n28,n32,n36,n40,n44,n48,n52,n56,n60,n64},
        two               ENUMERATED {n4,n8,n12,n16,n20,n24,n28,n32},
        four              INTEGER (1..16),
        eight             INTEGER (1..8),
        sixteen           INTEGER (1..4)
    }                                                 OPTIONAL,  -- Need M
}
```

| **RACH-ConfigCommon field descriptions** |
|---|
| **ssb-perRACH-OccasionAndCB-PreamblesPerSSB** |
| The meaning of this field is twofold: the CHOICE conveys the information about the number of SSBs per RACH occasion. Value *oneEighth* corresponds to one SSB associated with 8 RACH occasions, value *oneFourth* corresponds to one SSB associated with 4 RACH occasions, and so on. The ENUMERATED part indicates the number of Contention Based preambles per SSB. Value *n4* corresponds to 4 Contention Based preambles per SSB, value *n8* corresponds to 8 Contention Based preambles per SSB, and so on. The total number of CB preambles in a RACH occasion is given by *CB-preambles-per-SSB* * max(1, *SSB-per-rach-occasion*). See TS 38.213. |

As provided by 3GPP TS 38.213 V18.1.0
For unpaired spectrum,

- if a UE is not provided *tdd-UL-DL-ConfigurationCommon,* a PRACH occasion in a PRACH slot is valid if it does not precede a SS/PBCH block in the PRACH slot and starts at least $N_{gap}$ symbols after a last SS/PBCH block reception symbol, where $N_{gap}$ is provided in Table 8.1-2 and, if *channelAccessMode* = "*semiStatic*" is provided, does not overlap with a set of consecutive symbols before the start of a next channel occupancy time where the UE does not transmit [15, TS 37.213].

  - the candidate SS/PBCH block index of the SS/PBCH block corresponds to the SS/PBCH block index provided by *ssb-PositionsInBurst* in *SIB1* or in *ServingCellConfigCommon ,* as described in clause 4.1

- If a UE is provided *tdd-UL-DL-ConfigurationCommon,* a PRACH occasion in a PRACH slot is valid if
- it is within UL symbols, or
- it does not precede a SS/PBCH block in the PRACH slot and starts at least $N_{gap}$ symbols after a last downlink symbol and at least $N_{gap}$ symbols after a last SS/PBCH block symbol, where $N_{gap}$ is provided in Table 8.1-2, and if *channelAccessMode* = "*semiStatic*" is provided, does not overlap with a set of consecutive symbols before the start of a next channel occupancy time where there shall not be any transmissions, as described in [15, TS 37.213]

  - the candidate SS/PBCH block index of the SS/PBCH block corresponds to the SS/PBCH block index provided by *ssb-PositionsInBurst* in *SIB1* or in *ServingCellConfigCommon,* as described in clause 4.1.

SS/PBCH block indexes provided by ssb-PositionsInBurst in SIB1 or in ServingCellConfigCommon are mapped to valid PRACH occasions in the following order where the parameters are described in [TS 38.211].

- First, in increasing order of preamble indexes within a single PRACH occasion
- Second, in increasing order of frequency resource indexes for frequency multiplexed PRACH occasions
- Third, in increasing order of time resource indexes for time multiplexed PRACH occasions within a PRACH slot
- Fourth, in increasing order of indexes for PRACH slots.

**Time domain:** As captured above in [3GPP TS 38.211], "Random access preambles can only be transmitted in the time resources obtained from Tables 6.3.3.2-2 to 6.3.3.2-4 and depends on FR1 or FR2 and the spectrum type as defined in [TS 38.104]." For example, the PRACH Configuration Index 118 (as specified in Table 6.3.3.2-3) illustrated in FIG. 2, assuming SCS of 30 kHz. PRACH configuration 118 has a period of two ($x=2$) frames, i.e., $n_f = \{0,1\}$, and since $y=1$, it implies that the RACH Occasions (ROs) occur in subframes {2,3,4,7,8,9} of the 2nd frame. Moreover, since (1) a subframe has 2 slots for 30 kHz SCS, (2) the "number of PRACH slots within a subframe" is equal to 1, (3) the "number of time-domain PRACH occasions within a PRACH slot" is equal to 2, and (4) the "PRACH duration" is equal to 6, it implies that the ROs are within slots {5,7,9,15, 17,19}. Assuming that the common TDD-UL-DL pattern is DDDDU, then the valid ROs are only on the uplink (UL) slots {9,19} since the other slots are downlink (DL) slots.

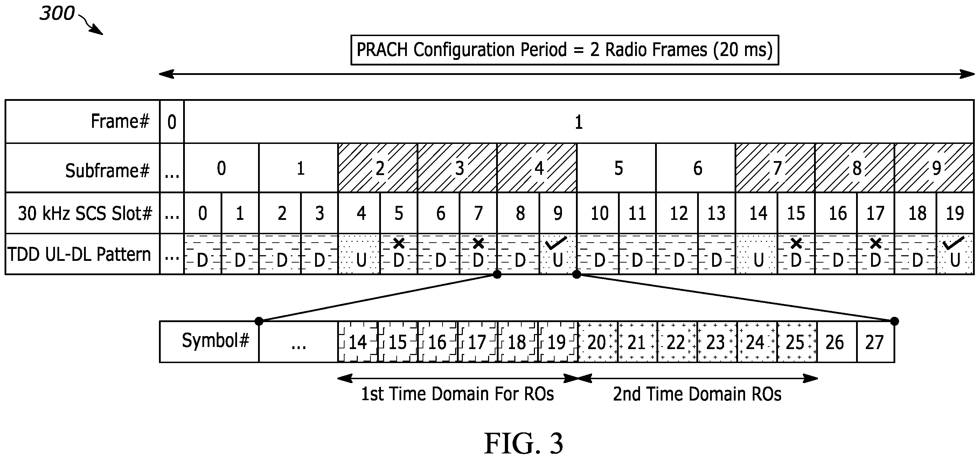

FIG. 3 illustrates an exemplary mapping 300 of the physical random access channel (PRACH) for Configuration index 118, which highlights at least one possible set of valid RACH occasions (RO) in uplink (UL) slots. From the illustration of the PRACH Configuration Index 118, as illustrated in FIG. 3, the valid ROs in UL slots are indicated by a check mark, which can be seen with respect to slots 9 and 19, while the invalid ROs in DL slots are indicated by an "X" mark.

**Frequency domain:** In the frequency domain, on the other hand, the ROs are configured using two parameters [3GPP TS 38.331]:

*msg1-FDM,* which indicates "The number of PRACH transmission occasions FDMed in one time instance", which could be one of 1,2,4, or 8; and

*msg1-FrequencyStart,* which indicates "Offset of lowest PRACH transmission occasion in frequency domain with respective to PRB 0".

**SSB-to-ROs mapping:** According to [3GPP TS 38.331], a UE maps the provided $N_{TX}^{SSB}$ SSBs to valid ROs according to RRC parameter *ssb-perRACH-OccasionAndCB-PreamblesPerSSB,* where "The meaning of this field is twofold: the CHOICE conveys the information about the number of SSBs per RACH occasion. Value oneEighth corresponds to one SSB associated with 8 RACH occasions, value oneFourth corresponds to one SSB associated with 4 RACH occasions, and so on. The ENUMERATED part indicates the number of Contention Based preambles per SSB. Value n4 corresponds to 4 Contention Based preambles per SSB, value n8 corresponds to 8 Contention Based preambles per SSB, and so on."

Moreover, SS/PBCH block (SSB) indexes provided by ssb-PositionsInBurst in SIB1 or in ServingCellConfig-Common are mapped to valid PRACH occasions in the following order:

- First, in increasing order of preamble indexes within a single PRACH occasion;
- Second, in increasing order of frequency resource indexes for frequency multiplexed PRACH occasions;
- Third, in increasing order of time resource indexes for time multiplexed PRACH occasions within a PRACH slot; and
- Fourth, in increasing order of indexes for PRACH slots.

The above implies that SSBs mapping to valid ROs are performed following a frequency first and time second ordering rule.

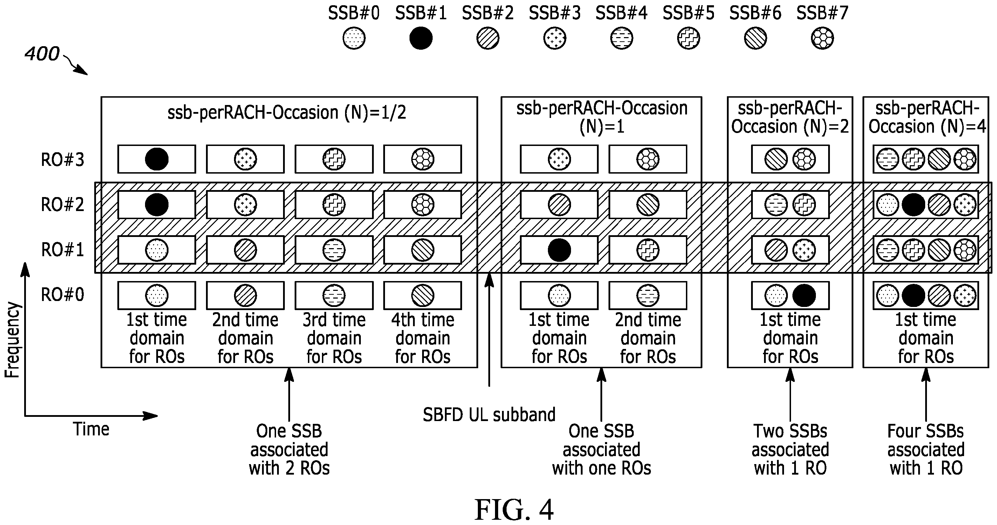

For example, if the number of SSBs $N_{TX}^{SSB} = 8$ and *msg1-FDM* = 4. Then, Figure 2 shows the SSBs to valid ROs mapping using the above mapping rules for different *ssb-perRACH-Occasion (N)* value. From FIG. 4, we can see that the required number of valid time domain ROs to map the provided SSBs depend on the configured *ssb-perRACH-Occasion (N)* value. For example, if *N = 1,* i.e., one SSB is associated with one RO, then two time-domain of valid ROs are required to map the eight ( $N_{TX}^{SSB} = 8$ ) SSBs. However, one time-domain of valid ROs is required to map the eight ( $N_{TX}^{SSB} = 8$ ) SSBs if *N* = 2 or *N* = 4, whereas four time-domain of valid ROs are required to map the eight ( $N_{TX}^{SSB} = 8$ ) SSBs if *N* = 1/2. More specifically, FIG. 4 illustrates an exemplary SSB-to-RO mapping for different ssb-perRACH-Occasion (N) values, and more specifically assuming that *msg1-FDM* = 4 and that the number of SSBs $N_{TX}^{SSB} = 8$ .

Further, FIG. 4 shows that if the valid time domain for ROs occur on SBFD symbols, then some of the configured ROs (i.e., via *msg1-FDM* and *msg1-FrequencyStart*) might be allocated outside the SBFD UL subband. Moreover, depending on the provided number of SSBs per RO, i.e., *ssb-perRACH-Occasion (N),* some of the SSBs might be *only* mapped to an RO outside the configured SBFD UL subband, e.g., SSBs#0, SSBs#3, SSBs#4, and SSBs#7 when *ssb-perRACH-Occasion (N)* is equal to one. However, when *ssb-perRACH-Occasion (N)* is equal to 4, we can see that every SSB is mapped, at least once, to an RO within the configured SBFD UL subband. The same is true when *ssb-perRACH-Occasion (N)* is equal to 1/2. Therefore, with SBFD UL subband, different SSBs to ROs mapping rules may be required.

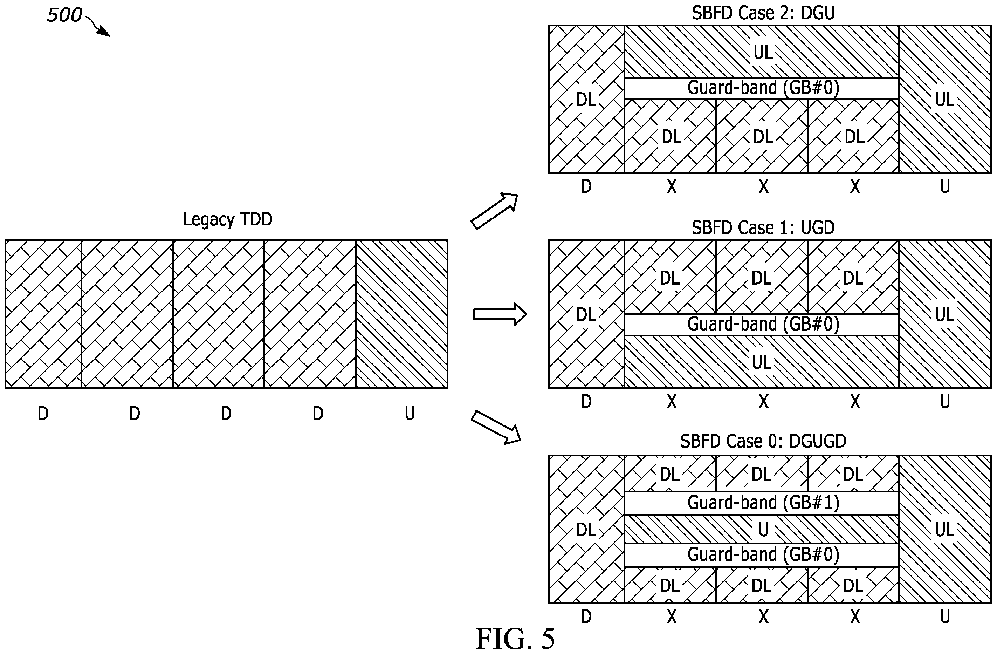

**SBFD in TDD-based systems:** Rel-18 SBFD scheme is proposed to overcome the issues encountered by legacy TDD scheme (i.e., reduced UL coverage, reduced UL capacity, and increased UL latency) by splitting the frequency domain resources of one or more of DL and/or flexible (F) symbols/slots into non-overlapping DL and UL subbands and therefore increasing the allocated time and frequency resources of UL communications. FIG. 5 shows a reconfiguration example of a DDDDU legacy TDD slot configuration into three DXXXU SBFD slot configuration, where the frequency domain of X slots (a.k.a SBFD slots) is divided into non-overlapping DL and UL subbands. SBFD-based configuration allocates more UL resources to UL communications as compared to legacy TDD, which can increase the UL communications capacity and coverage. Moreover, the UL frequency resources with SBFD-based configuration are available starting from slot#1 as opposed to the legacy TDD-based configuration, wherein the UL frequency resources are only available at slot#4. This can help by improving/reducing the UL communications latency as compared to legacy TDD-based configuration. More specifically, FIG. 5 illustrates a set 500 of exemplary reconfiguration examples from a DDDDU legacy time division duplexing (TDD) slot configuration into three DXXXU subband full duplex (SBFD) slot configurations.

Further, FIG. 5 shows three different SBFD-based slots, i.e., X slots configuration examples, from which the scheduling network entity might choose from depending on the deployment scenario and/or the UEs traffic needs. Other cases may be possible and are not precluded.

Correspondingly, current RACH configuration messages are designed considering UL slots, and therefore enhancements may be needed to make them applicable for use with SBFD UL subbands.

According to at least a first embodiment, in which there are separate *ssb-perRACH-OccasionAndCB-PreamblesPerSSB values, one for UL-only symbols and one for SBFD symbols,* a user equipment (UE) receives, from a serving network node, e.g., via SIB1 signaling and/or via dedicated signaling, a SBFD time-frequency configuration message, wherein the configuration message indicates the time symbols, and the frequency resource blocks (RBs) used for SBFD operations.

Furthermore, the UE receives a RACH configuration message, via SIB1 signaling and/or via a dedicated signaling, wherein the configuration message indicates at least one of

- a PRACH configuration index,
- *a msg1-FDM,*
- *a msg1-FrequencyStart,*
- one or more of subframe numbers or slot numbers (i.e., Subframe Number and Slot Number columns in Table 6.3.3.2-3 and Table 6.3.3.2-4 in TS 38.211, respectively)
- a first *ssb-perRACH-OccasionAndCB-PreamblesPerSSB,* for SBFD symbols, and,
- a second *ssb-perRACH-OccasionAndCB-PreamblesPerSSB,* for UL-only symbols,

wherein the first *ssb-perRACH-OccasionAndCB-PreamblesPerSSB* ensures that every SSB is mapped, at least once, to a RO falling within the SBFD UL subband during the PRACH period.

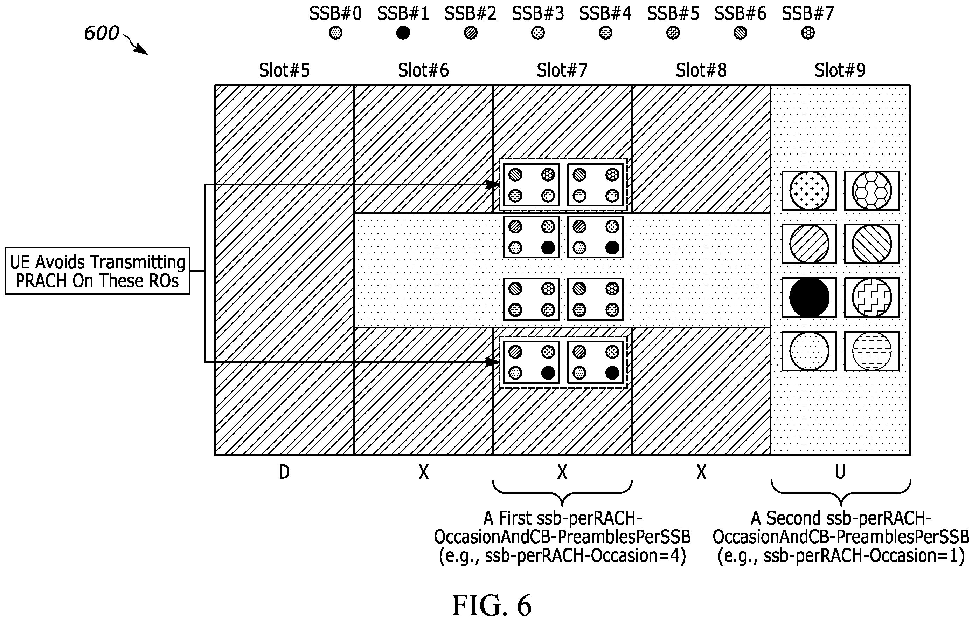

During the SSB-to-RO mapping, the UE uses the existing rules to associate SSBs to ROs occurring at SBFD symbols (i.e., X symbols), including ROs falling outside the SBFD UL subband. However, during the PRACH transmission at SBFD symbols, the UE avoids transmitting a PRACH preamble on a RO falling outside the SBFD UL subband, as illustrated in FIG. 6, where the ROs falling outside the SBFD UL subband are determined as invalid. More specifically, FIG. 6 illustrates an example 600 of separate ssb-perRACH-OccasionAndCB-PreamblesPerSSB values including one for UL-only symbols and one for SBFD UL subband symbols, in accordance with at least one aspect of the present disclosure.

Such an example assumes that *msg1-FDM* = 4 and the number of SSBs $N_{TX}^{SSB} = 8$.

In some examples, the indicated Subframe (slot) numbers *override* the configured Subframe (slot) numbers in Table 6.3.3.2-3 (Table 6.3.3.2-4) in TS 38.211 for SBFD Slots, for example, when determining the RA time resources of SBFD slots. In some other examples, the indicated Subframe (slot) numbers *are appended to* the configured Subframe (slot) numbers in Table 6.3.3.2-3 (Table 6.3.3.2-4) in TS 38.211 for SBFD Slots.

In some implementations, the indicated *msg1-FDM and msg1-FrequencyStart* are common for SBFD UL symbols and for UL-only symbols, which are selected to ensure that at least one RO falls within the SBFD UL subband.

In some other implementations, the UE receives, via the RACH configuration message, at least one of

> *a msg1-FDM,* for SBFD UL symbols,
> *a msg1-FrequencyStart,* for SBFD symbols,
> *a msg1-FDM,* for UL-only symbols,
> *a msg1-FrequencyStart,* for UL-only symbols,
> a PRACH configuration index, for SBFD symbols, and
> a PRACH configuration index, for UL-only symbols.

In some implementations, the *msg1-FrequencyStart* for SBFD symbols is indicated with respect to PRB 0 of the configured UL BWP or the configured SBFD UL subband. In some other implementations, the *msg1-FrequencyStart* for SBFD symbols is indicated with respect to *msg1-FrequencyStart* for UL-only symbols. In yet some other implementations, the *msg1-FrequencyStart* for SBFD UL symbols is preconfigured.

In some implementations, *msg1-FDM* for SBFD symbols is determined implicitly by the UE, e.g.,

- as a relative value to the *msg1-FDM* for UL-only symbols

  o e.g., *msg1-FDM* for SBFD symbols is X smaller than *msg1-FDM* for UL-only symbols.

- as relative value to the SBFD UL subband size

  o e.g., if SBFD UL subband size is greater than a preconfigured number of RBs, then *msg1-FDM* for SBFD symbols is A, otherwise *msg1-FDM* for SBFD UL symbols is B, where A and B are predefined, e.g., A and B $\in$ {1,2}.

According to at least a second embodiment 2, in which the ROs falling only within the UL SB are counted before mapping the provided SSBs to valid ROs, the UE first identifies the valid ROs as the ROs occurring within the UL-only symbols and the SBFD UL subband, wherein the valid ROs are indexed according to one of the following two options:

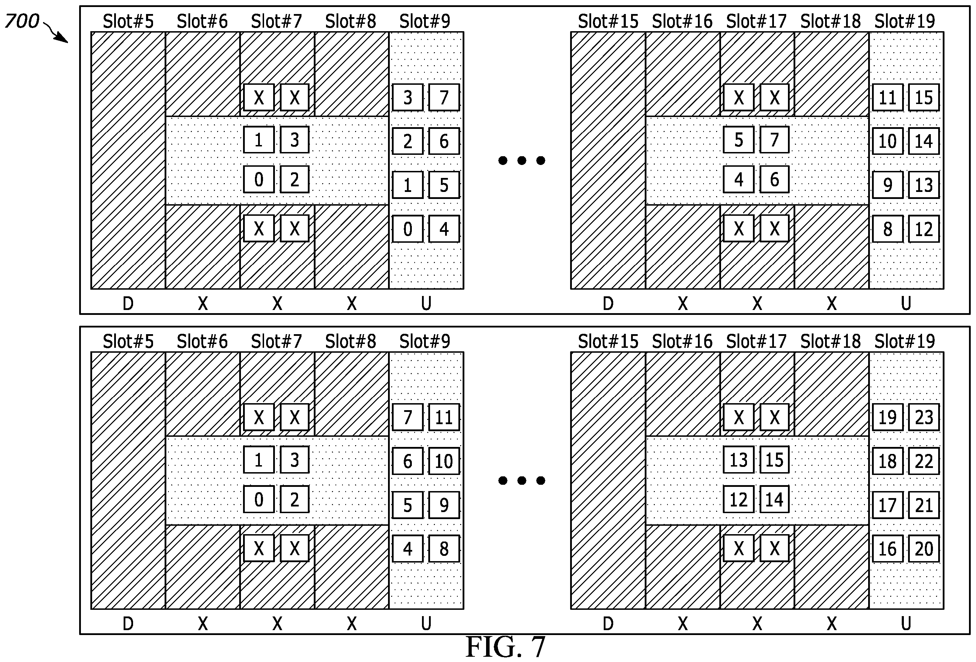

Option 1: the valid ROs within UL-only symbols and the SBFD UL subband are indexed separately, e.g., as exemplified in the top example in FIG. 7.

Option 2: the valid ROs within both UL-only symbols and the SBFD UL subband are indexed jointly, e.g., as exemplified in the bottom example in FIG. 7.

More specifically, FIG. 7 illustrates a pair of exemplary valid ROs indexing options, assuming msg1-FDM = 4, in accordance with at least one aspect of the present disclosure. In FIG. 7, generally, the ROs are identified by a box, and the invalidated ROs are indicated by an "X" inside the box.

After that, the UE associates the SSBs to the valid ROs according to the existing rules and the ROs indexing option.

Hence, in one embodiment, Two separate SSBs to ROs association values are indicated, one for ROs of UL-only symbols and another for SBFD symbols, which may more readily allow for SSBs to ROs association values being indicated which can be different. The SSBs to ROs association value of SBFD symbols is selected to help better ensure that every SSB is mapped at least once to an RO falling within the SBFD UL subband within the PRACH period. At least one possible advantage, can include the possibility that current RACH configuration messages and rules are used.

In an alternative embodiment, new ROs validation rules and new SSBs to valid ROs mapping methods can be introduced.

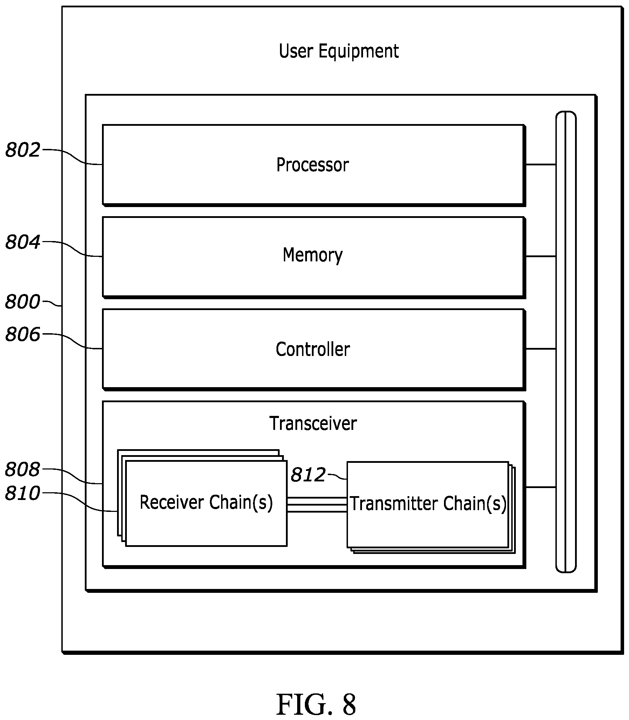

FIG. 8 illustrates an example of a UE 800, in accordance with aspects of the present disclosure. The UE 800 may include at least one processor 802, at least one memory 804, at least one controller 806, and at least one transceiver 808. The processor 802, the memory 804, the controller 806, the transceiver 808, various combinations thereof, or various components thereof may be examples of means for performing various aspects of the present disclosure as described herein. These components may be coupled (e.g., operatively, communicatively, functionally, electronically, electrically) via one or more interfaces.

The processor 802, the memory 804, the controller 806, the transceiver 808, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 802 may include an intelligent hardware device (e.g., a general-purpose processor, a DSP, a central processing unit (CPU), an ASIC, a field programmable gate array (FPGA), or any combination thereof). In some implementations, the processor 802 may be configured to operate the memory 804. In some other implementations, the memory 804 may be integrated into the processor 802. The processor 802 may be configured to execute computer-readable instructions stored in the memory 804 to cause the UE 800 to perform various functions of the present disclosure.

The memory 804 may include volatile or non-volatile memory. The memory 804 may store computer-readable, computer-executable code including instructions when executed by the processor 802 to cause the UE 800 to perform various functions described herein. The code may be stored in a non-transitory computer-readable medium such the memory 804 or another type of memory. Computer-readable media includes both non-transitory computer storage media and communication media including any medium that facilitates the transfer of a computer program from one place to another. A non-transitory storage medium may be any available medium that may be accessed by a general-purpose or special-purpose computer.

The controller 806 may manage input and output signals for the UE 800. The controller 806 may also manage peripherals not integrated into the UE 800. In some implementations, the controller 806 may utilize an operating system such as iOS®, ANDROID®, WINDOWS®, or other operating systems. In some implementations, the controller 806 may be implemented as part of the processor 802.

In some implementations, the UE 800 may include at least one transceiver 808. In some other implementations, the UE 800 may have more than one transceiver 808. The transceiver 808 may represent a wireless transceiver. The transceiver 808 may also represent and/or include one or more other wireless and/or wired communication interfaces, such as a network interface, a universal serial bus (USB) port, on optical transceiver, and/or any other transceiver, interface, port, communication interface, etc. The transceiver 808 may include one or more receiver chains 810, one or more transmitter chains 812, or a combination thereof.

A receiver chain 810 may be configured to receive signals (e.g., control information, data, packets) over a wireless medium. For example, the receiver chain 810 may include one or more antennas to receive the signal over the air or wireless medium. The receiver chain 810 may include at least one amplifier (e.g., a Low-Noise Amplifier (LNA)) configured to amplify the received signal. The receiver chain 810 may include at least one demodulator configured to demodulate the received signal and obtain the transmitted data by reversing the modulation technique applied during transmission of the signal. The receiver chain 810 may include at least one decoder for decoding the processing the demodulated signal to receive the transmitted data.

A transmitter chain 812 may be configured to generate and transmit signals (e.g., control information, data, packets). The transmitter chain 812 may include at least one modulator for modulating data onto a carrier signal, preparing the signal for transmission over a wireless medium. The at least one modulator may be configured to support one or more modulation techniques such as Amplitude Modulation (AM), Frequency Modulation (FM), digital modulation schemes like Phase-Shift Keying (PSK) or Quadrature Amplitude Modulation (QAM), and/or any other modulation techniques. The transmitter chain 812 may also include at least one power amplifier configured to amplify the modulated signal to an appropriate power level suitable for transmission over the wireless medium. The transmitter chain 812 may also include one or more antennas for transmitting the amplified signal into the air or wireless medium.

In some implementations, the processor 802 and the memory 804 coupled with the processor 802 may be configured to cause the UE 800 to perform one or more of the functions described herein (e.g., executing, by the processor 802, instructions stored in the memory 804). For example, the processor 802 may support wireless communication at the UE 800 in accordance with the examples as disclosed herein.

The UE 800 may be configured to support random access channel (RACH) configurations, which support subband full duplex (SBFD). More specifically, the UE 800 may be configured to support a means for receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. The physical RACH can have multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. The UE 800 may be further configured to support a means for transmitting a physical RACH preamble on a selected RO, which occurs in the non-overlapping uplink frequency resource portions of the physical RACH slot.

According to a possible embodiment, the slots of the physical RACH which include both non-overlapping uplink frequency resource portions and downlink frequency resource portions are slots of a random access channel, which can include non-overlapping subband full duplex (SBFD) symbols. In some of these instances, the at least one of the first RACH configuration definitions can include an ssb-perRACH-OccasionAndCB-PreamblesPerSSB for SBFD symbols. In other of these instances the RACH configuration message can include at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

According to a possible embodiment, the RACH configuration message includes the set of subframe numbers, which override any previously configured set of subframe numbers, such as subframe numbers in Table 6.3.3.2-3 in TS 38.211 used to determine time resources of SBFD slots. In other instances, the set of subframe numbers are appended to any previously configured set of subframe numbers.

According to a possible embodiment, the RACH configuration message includes the set of slot numbers, which override any previously configured set of slot numbers, such as slot numbers in Table 6.3.3.2-4 in TS 38.211 used to determine time resources of SBFD slots. In other instances, the set of slot numbers are appended to any previously configured set of slot numbers.

In some instances, the msg1-FrequencyStart for SBFD symbols can be indicated relative to a physical resource block (PRB) 0 of a configured UL bandwidth part (BWP) or a configured SBFD UL subband; is indicated relative to msg1-FrequencyStart for UL-only symbols; or is preconfigured.

In some instances, the msg1-FDM for SBFD symbols can be determined implicitly by the UE as a relative value to the msg1-FDM for UL-only symbols, or as a relative value to an SBFD UL subband size.

In some instances, the msgA-RO-FrequencyStart for SBFD symbols can be indicated relative to a physical resource block (PRB) 0 of a configured UL bandwidth part (BWP) or a configured SBFD UL subband; is indicated relative to msgA-RO-FrequencyStart for UL-only symbols; or is preconfigured.

In some instances, the msgA-RO-FDM for SBFD symbols can be determined implicitly by the UE as a relative value to the msgA-RO-FDM for UL-only symbols, or as a relative value to an SBFD UL subband size.

In some instances, the valid ROs of SBFD symbols for use with a physical RACH preamble can be the symbols included within the non-overlapping uplink frequency resource portions. In some of these instances, the valid ROs of the slots of the physical RACH which includes only the uplink symbol portion, and the slots of the physical RACH which include both non-overlapping uplink symbol portions and downlink symbol portions can be indexed separately. In other of these instances, the valid ROs of the slots of the physical RACH which includes only the uplink symbol portion, and the slots of the physical RACH which include both non-overlapping uplink symbol portions and downlink symbol portions can be indexed jointly.

In some instances, the at least one of the first RACH configuration definitions included as part of the RACH configuration message can be separate from the at least one of the second RACH configuration definitions included as part of the RACH configuration message.

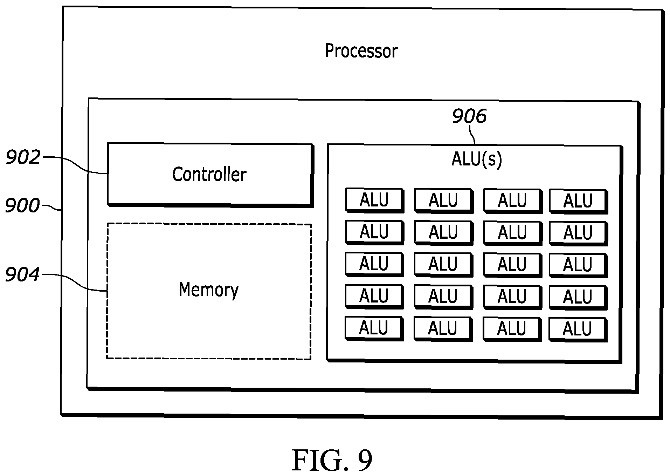

FIG. 9 illustrates an example of a processor 900 in accordance with aspects of the present disclosure. The processor 900 may be an example of a processor configured to perform various operations in accordance with the examples described herein. The processor 900 may include at least one controller 902 configured to perform various operations in accordance with the examples described herein. The processor 900 may optionally include at least one memory 904, which may be, for example, an L1/L2/L3 cache. Additionally, or alternatively, the processor 900 may optionally include one or more arithmetic-logic units (ALUs) 906. One or more of these components may be in electronic communication or otherwise coupled (e.g., operatively, communicatively, functionally, electronically, electrically) via one or more interfaces (e.g., buses).

The processor 900 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 900)) or other memory (e.g., Random Access Memory (RAM), Read-Only Memory (ROM), Dynamic RAM (DRAM), Synchronous DRAM (SDRAM), Static RAM (SRAM), Ferroelectric RAM (FeRAM), Magnetic RAM (MRAM), Resistive RAM (RRAM), flash memory, Phase Change Memory (PCM), and others).

The controller 902 may be configured to manage and coordinate various operations (e.g., signaling, receiving, obtaining, retrieving, transmitting, outputting, forwarding, storing, determining, identifying, accessing, writing, and reading) of the processor 900 to cause the processor 900 to support various operations in accordance with examples as described herein. For example, the controller 902 may operate as a control unit of the processor 900, generating control signals that manage the operation of various components of the processor 900. These control signals include enabling or disabling functional units, selecting data paths, initiating memory access, and coordinating the timing of operations.

The controller 902 may be configured to fetch (e.g., obtain, retrieve, receive) instructions from the memory 904 and determine subsequent instruction(s) to be executed to cause the processor 900 to support various operations in accordance with examples as described herein. The controller 902 may be configured to track memory addresses of instructions associated with the memory 904. The controller 902 may be configured to decode instructions to determine the operation to be performed and the operands involved. For example, the controller 902 may be configured to interpret the instruction and determine control signals to be output to other components of the processor 900 to cause the processor 900 to support various operations in accordance with examples as described herein. Additionally, or alternatively, the controller 902 may be configured to manage the flow of data within the processor 900. The controller 902 may be configured to control the transfer of data between registers, ALUs, and other functional units of the processor 900.

The memory 904 may include one or more caches (e.g., memory local to or included in the processor 900 or other memory, such RAM, ROM, DRAM, SDRAM, SRAM, MRAM, flash memory, etc. In some implementations, the memory 904 may reside within or on a processor chipset (e.g., local to the processor 900). In some other implementations, the memory 904 may reside external to the processor chipset (e.g., remote to the processor 900).

The memory 904 may store computer-readable, computer-executable code including instructions that, when executed by the processor 900, cause the processor 900 to perform various functions described herein. The code may be stored in a non-transitory computer-readable medium such as system memory or another type of memory. The controller 902 and/or the processor 900 may be configured to execute computer-readable instructions stored in the memory 904 to cause the processor 900 to perform various functions. For example, the processor 900 and/or the controller 902 may be coupled with or to the memory 904, the processor 900, the controller 902, and the memory 904 may be configured to perform various functions described herein. In some examples, the processor 900 may include multiple processors and the memory 904 may include multiple memories. One or more of the multiple processors may be coupled with one or more of the multiple memories, which may, individually or collectively, be configured to perform various functions herein.

The one or more ALUs 906 may be configured to support various operations in accordance with examples as described herein. In some implementations, the one or more ALUs 906 may reside within or on a processor chipset (e.g., the processor 900). In some other implementations, the one or more ALUs 906 may reside external to the processor chipset (e.g., the processor 900). One or more ALUs 906 may perform one or more computations such as addition, subtraction, multiplication, and division on data. For example, one or more ALUs 906 may receive input operands and an operation code, which determines an operation to be executed. One or more ALUs 906 be configured with a variety of logical and arithmetic circuits, including adders, subtractors, shifters, and logic gates, to process and manipulate the data according to the operation. Additionally, or alternatively, the one or more ALUs 906 may support logical operations such as AND, OR, exclusive-OR (XOR), not-OR (NOR), and not-AND (NAND), enabling the one or more ALUs 906 to handle conditional operations, comparisons, and bitwise operations.

The processor 900 may support wireless communication in accordance with examples as disclosed herein.

According to a possible embodiment relating to a UE, the at least one controller 902 can be configured to cause the processor 900 to support random access channel (RACH) configurations, which support subband full duplex (SBFD). More specifically, the processor 900 may be configured to support a means for receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. The physical RACH can have multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. The processor 900 may be further configured to support a means for transmitting a physical RACH preamble on a selected RO, which occurs in the non-overlapping uplink frequency resource portions of the physical RACH slot.

According to a possible embodiment, the slots of the physical RACH which include both non-overlapping uplink frequency resource portions and downlink frequency resource portions are slots of a random access channel, which can include non-overlapping subband full duplex (SBFD) symbols. In some of these instances, the at least one of the first RACH configuration definitions can include an ssb-perRACH-OccasionAndCB-PreamblesPerSSB for SBFD symbols. In other of these instances the RACH configuration message can include at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

According to a possible embodiment, the RACH configuration message includes the set of subframe numbers, which override any previously configured set of subframe numbers, such as subframe numbers in Table 6.3.3.2-3 in TS 38.211 used to determine time resources of SBFD slots. In other instances, the set of subframe numbers are appended to any previously configured set of subframe numbers.

According to a possible embodiment, the RACH configuration message includes the set of slot numbers, which override any previously configured set of slot numbers, such as slot numbers in Table 6.3.3.2-4 in TS 38.211 used to determine time resources of SBFD slots. In other instances, the set of slot numbers are appended to any previously configured set of slot numbers.

In some instances, the msg1-FrequencyStart for SBFD symbols can be indicated relative to a physical resource block (PRB) 0 of a configured UL bandwidth part (BWP) or a configured SBFD UL subband; is indicated relative to msg1-FrequencyStart for UL-only symbols; or is preconfigured.

In some instances, the msg1-FDM for SBFD symbols can be determined implicitly by the UE as a relative value to the msg1-FDM for UL-only symbols, or as a relative value to an SBFD UL subband size.

In some instances, the msgA-RO-FrequencyStart for SBFD symbols can be indicated relative to a physical resource block (PRB) 0 of a configured UL bandwidth part (BWP) or a configured SBFD UL subband; is indicated relative to msgA-RO-FrequencyStart for UL-only symbols; or is preconfigured.

In some instances, the msgA-RO-FDM for SBFD symbols can be determined implicitly by the UE as a relative value to the msgA-RO-FDM for UL-only symbols, or as a relative value to an SBFD UL subband size.

In some instances, the valid ROs of SBFD symbols for use with a physical RACH preamble can be the symbols included within the non-overlapping uplink frequency resource portions. In some of these instances, the valid ROs of the slots of the physical RACH which includes only the uplink symbol portion, and the slots of the physical RACH which include both non-overlapping uplink symbol portions and downlink symbol portions can be indexed separately. In other of these instances, the valid ROs of the slots of the physical RACH which includes only the uplink symbol portion, and the slots of the physical RACH which include both non-overlapping uplink symbol portions and downlink symbol portions can be indexed jointly.

In some instances, the at least one of the first RACH configuration definitions included as part of the RACH configuration message can be separate from the at least one of the second RACH configuration definitions included as part of the RACH configuration message.

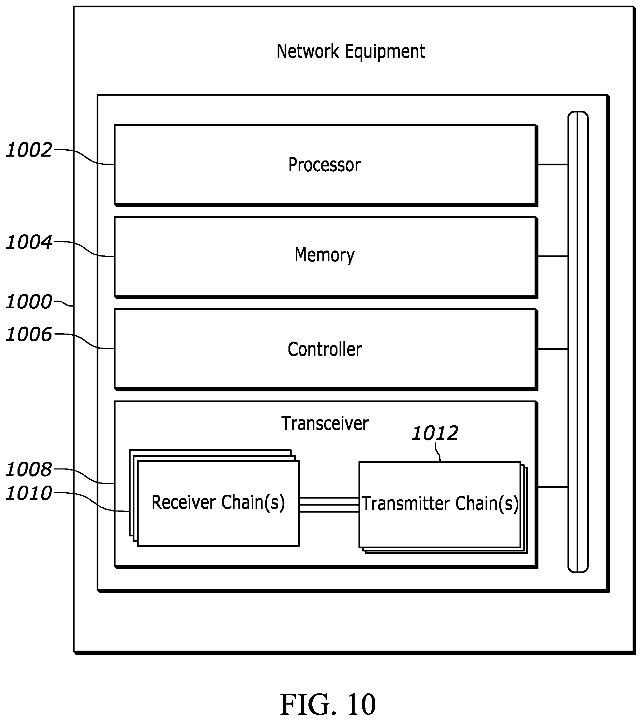

FIG. 10 illustrates an example of an NE 1000 in accordance with aspects of the present disclosure. The NE 1000 may include a processor 1002, a memory 1004, a controller 1006, and a transceiver 1008. The processor 1002, the memory 1004, the controller 1006, the transceiver 1008, or various combinations thereof or various components thereof may be examples of means for performing various aspects of the present disclosure as described herein. These components may be coupled (e.g., operatively, communicatively, functionally, electronically, electrically) via one or more interfaces.

The processor 1002, the memory 1004, the controller 1006, the transceiver 1008, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 1002 may include an intelligent hardware device (e.g., a general-purpose processor, a DSP, a CPU, an ASIC, an FPGA, or any combination thereof). In some implementations, the processor 1002 may be configured to operate the memory 1004. In some other implementations, the memory 1004 may be integrated into the processor 1002. The processor 1002 may be configured to execute computer-readable instructions stored in the memory 1004 to cause the NE 1000 to perform various functions of the present disclosure.

The memory 1004 may include volatile or non-volatile memory. The memory 1004 may store computer-readable, computer-executable code including instructions when executed by the processor 1002 cause the NE 1000 to perform various functions described herein. The code may be stored in a non-transitory computer-readable medium such the memory 1004 or another type of memory. Computer-readable media includes both non-transitory computer storage media and communication media including any medium that facilitates the transfer of a computer program from one place to another. A non-transitory storage medium may be any available medium that may be accessed by a general-purpose or special-purpose computer.

The controller 1006 may manage input and output signals for the NE 1000. The controller 1006 may also manage peripherals not integrated into the NE 1000. In some implementations, the controller 1006 may utilize an operating system such as iOS®, ANDROID®, WINDOWS®, or other operating systems. In some implementations, the controller 1006 may be implemented as part of the processor 1002.

In some implementations, the NE 1000 may include at least one transceiver 1008. In some other implementations, the NE 1000 may have more than one transceiver 1008. The transceiver 1008 may represent at least one wireless transceiver and may include other transceivers, such as a wired transceiver, like a network interface. The transceiver 1008 may include one or more receiver chains 1010, one or more transmitter chains 1012, or a combination thereof.

A receiver chain 1010 may be configured to receive signals (e.g., control information, data, packets) over a wireless medium. For example, the receiver chain 1010 may include one or more antennas for receiving the signal over the air or wireless medium. The receiver chain 1010 may include at least one amplifier (e.g., an LNA) configured to amplify the received signal. The receiver chain 1010 may include at least one demodulator configured to demodulate the received signal and obtain the transmitted data by reversing the modulation technique applied during the transmission of the signal. The receiver chain 1010 may include at least one decoder for decoding the processing the demodulated signal to receive the transmitted data.

A transmitter chain 1012 may be configured to generate and transmit signals (e.g., control information, data, packets). The transmitter chain 1012 may include at least one modulator for modulating data onto a carrier signal, preparing the signal for transmission over a wireless medium. The at least one modulator may be configured to support one or more modulation techniques such as AM, FM, or digital modulation schemes like PSK or QAM, and/or any other modulation techniques. The transmitter chain 1012 may also include at least one power amplifier configured to amplify the modulated signal to an appropriate power level suitable for transmission over the wireless medium. The transmitter chain 1012 may also include one or more antennas for transmitting the amplified signal into the air or wireless medium.

In some implementations, the processor 1002 and the memory 1004 coupled with the processor 1002 may be configured to cause the NE 1000 to perform one or more of the functions described herein (e.g., executing, by the processor 1002, instructions stored in the memory 1004). For example, the processor 1002 may support wireless communication at the NE 1000 in accordance with examples as disclosed herein.

In operation according to a possible embodiment, the at least one processor 1002 can be configured to support a means for formulating a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. The physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. The at least one processor 1002 can be further configured to support a means for transmitting the random access channel (RACH) configuration message to a user equipment (UE), and receiving a physical RACH preamble on a selected RO from the UE, which occurs in the non-overlapping uplink frequency resource portions of the physical RACH slot.

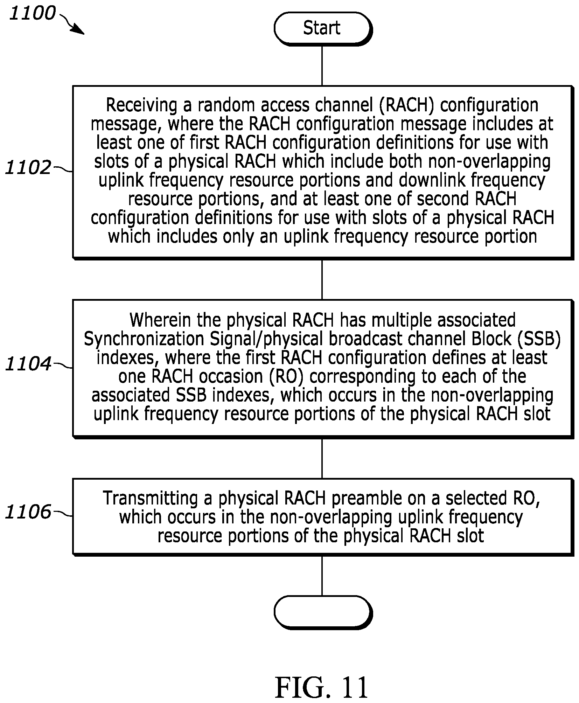

FIG. 11 illustrates an example flowchart 1100 of a method in accordance with aspects of the present disclosure. The operations of the method may be implemented by a UE, as described herein. In some implementations, the UE may execute a set of instructions to control the function elements of the UE to perform the described functions.

At 1102, the method can include receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. At 1104, the physical RACH is identified as having multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. At 1106, the method can further include transmitting a physical RACH preamble on a selected RO, which occurs in the non-overlapping uplink frequency resource portions of the physical RACH slot.

According to a possible embodiment, the RACH configuration message includes the set of subframe numbers, which override any previously configured set of subframe numbers, such as subframe numbers in Table 6.3.3.2-3 in TS 38.211 used to determine time resources of SBFD slots. In other instances, the set of subframe numbers are appended to any previously configured set of subframe numbers.

According to a possible embodiment, the RACH configuration message includes the set of slot numbers, which override any previously configured set of slot numbers, such as slot numbers in Table 6.3.3.2-4 in TS 38.211 used to determine time resources of SBFD slots. In other instances, the set of slot numbers are appended to any previously configured set of slot numbers.

According to a possible embodiment, the slots of the physical RACH which include both non-overlapping uplink frequency resource portions and downlink frequency resource portions are slots of a random access channel, which can include non-overlapping subband full duplex (SBFD) symbols. In some of these instances, the at least one of the first RACH configuration definitions can include an ssb-perRACH-OccasionAndCB-PreamblesPerSSB for SBFD symbols. In other of these instances the RACH configuration message can include at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

In some instances, the msg1-FrequencyStart for SBFD symbols can be indicated relative to a physical resource block (PRB) 0 of a configured UL bandwidth part (BWP) or a configured SBFD UL subband; is indicated relative to msg1-FrequencyStart for UL-only symbols; or is preconfigured.

In some instances, the msg1-FDM for SBFD symbols can be determined implicitly by the UE as a relative value to the msg1-FDM for UL-only symbols, or as a relative value to an SBFD UL subband size.

In some instances, the msgA-RO-FrequencyStart for SBFD symbols can be indicated relative to a physical resource block (PRB) 0 of a configured UL bandwidth part (BWP) or a configured SBFD UL subband; is indicated relative to msgA-RO-FrequencyStart for UL-only symbols; or is preconfigured.

In some instances, the msgA-RO-FDM for SBFD symbols can be determined implicitly by the UE as a relative value to the msgA-RO-FDM for UL-only symbols, or as a relative value to an SBFD UL subband size.

In some instances, the valid ROs of SBFD symbols for use with a physical RACH preamble can be the symbols included within the non-overlapping uplink frequency resource portions. In some of these instances, the valid ROs of the slots of the physical RACH which includes only the uplink symbol portion, and the slots of the physical RACH which include both non-overlapping uplink symbol portions and downlink symbol portions can be indexed separately. In other of these instances, the valid ROs of the slots of the physical RACH which includes only the uplink symbol portion, and the slots of the physical RACH which include both non-overlapping uplink symbol portions and downlink symbol portions can be indexed jointly.

In some instances, the at least one of the first RACH configuration definitions included as part of the RACH configuration message can be separate from the at least one of the second RACH configuration definitions included as part of the RACH configuration message.

It should be noted that the method described herein describes a possible implementation, and that the operations and the steps may be rearranged or otherwise modified and that other implementations are possible.

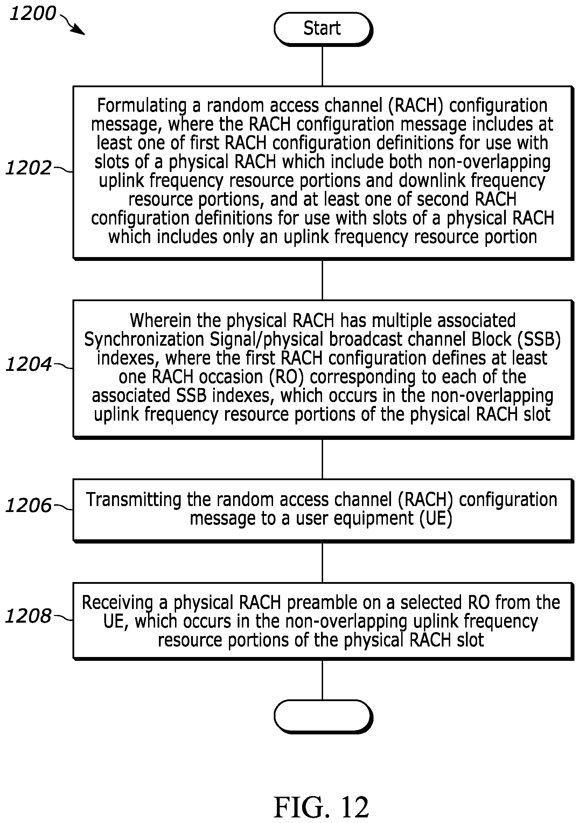

FIG. 12 illustrates an example flowchart 1200 of a method in accordance with aspects of the present disclosure. The operations of the method may be implemented by a NE. In some implementations, the NE may execute a set of instructions to control the function elements of the NE to perform the described functions.

At 1202, the method can include formulating a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion. At 1204, the physical RACH is identified as having multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot. At 1206, the method can further include transmitting the random access channel (RACH) configuration message to a user equipment (UE). At 1208, the method can further include receiving a physical RACH preamble on a selected RO from the UE, which occurs in the non-overlapping uplink frequency resource portions of the physical RACH slot.

It should be noted that the method described herein describes a possible implementation, and that the operations and the steps may be rearranged or otherwise modified and that other implementations are possible.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

At least some methods of this disclosure can be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device on which resides a finite state machine capable of implementing the flowcharts shown in the figures may be used to implement the processor functions of this disclosure.

At least some embodiments can improve operation of the disclosed devices. Various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting. Various changes may be made without departing from the spirit and scope of the disclosure.

An article "a" before an element is unrestricted and understood to refer to "at least one" of those elements or "one or more" of those elements. The terms "a," "at least one," "one or more," and "at least one of one or more" may be interchangeable. For example, an element proceeded by "a," "an," or the like does not, without more constraints, preclude the existence of additional identical elements in the process, method, article, or apparatus that comprises the element. As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). For example, the phrase "at least one of," "at least one selected from the group of," or "at least one selected from" followed by a list is defined to mean one, some, or all, but not necessarily all of, the elements in the list. Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on." Further, as used herein, including in the claims, a "set" may include one or more elements.

The terms "comprises," "comprising," "including," or any other variation thereof, are intended to cover a non-exclusive inclusion, such that a process, method, article, or apparatus that comprises a list of elements does not include only those elements but may include other elements not expressly listed or inherent to such process, method, article, or apparatus. Also, the term "another" is defined as at least a second or more. The terms "including," "having," and the like, as used herein, are defined as "comprising." Terms of approximation, such as "approximately," "near," "substantially," and/or other related terms, unless otherwise defined, are defined as a range within +/- 5% of the approximated element, a range within +/- 10% of the approximated element, and/or a range close enough to the approximated element to achieve an intended result. All elements of the disclosed embodiments can be modified with such terms. In this document, relational terms such as "first," "second," and the like may be used solely to distinguish one entity or action from another entity or action without necessarily requiring or implying any actual such relationship or order between such entities or actions.

The background section is not admitted as prior art, is written as the inventor's own understanding of the context of some embodiments at the time of filing, and includes the inventor's own recognition of any problems with existing technologies and/or problems experienced in the inventor's own work.

Further aspects of the invention are provided by the subject matter of the following numbered clauses:

Clause 1. A user equipment for wireless communication, comprising: at least one memory; and at least one processor coupled with the at least one memory and configured to cause the user equipment to: receive a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion; where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; and transmit a physical RACH preamble on a selected RO, which occurs in the non-overlapping uplink frequency resource portions of the physical RACH slot.

Clause 2. The user equipment of clause 1, wherein the slots of the physical RACH which include both non-overlapping uplink frequency resource portions and downlink frequency resource portions are slots of a random access channel, which include non-overlapping subband full duplex (SBFD) symbols.

Clause 3. The user equipment of clause 2, wherein the at least one of the first RACH configuration definitions include an ssb-perRACH-OccasionAndCB-PreamblesPerSSB for SBFD symbols.

Clause 4. The user equipment of clause 2, wherein the RACH configuration message includes at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

Clause 5. The user equipment of clause 4, wherein the RACH configuration message includes the set of subframe numbers, which override any previously configured set of subframe numbers, such as subframe numbers in Table 6.3.3.2-3 in TS 38.211 used to determine time resources of SBFD slots.

Clause 6. The user equipment of clause 4, wherein the RACH configuration message includes the set of subframe numbers, which are appended to any previously configured set of subframe numbers, such as subframe numbers in Table 6.3.3.2-3 in TS 38.211 used to determine time resources of SBFD slots.

Clause 7. The user equipment of clause 4, wherein the RACH configuration message includes the set of slot numbers, which override any previously configured set of slot numbers, such as slot numbers in Table 6.3.3.2-4 in TS 38.211 used to determine time resources of SBFD slots.

Clause 8. The user equipment of clause 4, wherein the RACH configuration message includes the set of slot numbers, which are appended to any previously configured set of slot numbers, such as slot numbers in Table 6.3.3.2-4 in TS 38.211 used to determine time resources of SBFD slots.

Clause 9. The user equipment of clause 4, wherein the msg1-FrequencyStart for SBFD symbols is indicated relative to a physical resource block (PRB) 0 of a configured UL bandwidth part (BWP) or a configured SBFD UL subband; is indicated relative to msg1-FrequencyStart for UL-only symbols; or is preconfigured.

Clause 10. The user equipment of clause 4, wherein the msg1-FDM for SBFD symbols is determined implicitly by the UE as a relative value to the msg1-FDM for UL-only symbols, or as a relative value to an SBFD UL subband size.

Clause 11. The user equipment of clause 4, wherein the msgA-RO-FrequencyStart for SBFD symbols is indicated relative to a physical resource block (PRB) 0 of a configured UL bandwidth part (BWP) or a configured SBFD UL subband; is indicated relative to msgA-RO-FrequencyStart for UL-only symbols; or is preconfigured.

Clause 12. The user equipment of clause 4, wherein the msgA-RO-FDM for SBFD symbols is determined implicitly by the UE as a relative value to the msgA-RO-FDM for UL-only symbols, or as a relative value to an SBFD UL subband size.

Clause 13. The user equipment of clause 4, wherein the valid ROs of SBFD symbols for use with a physical RACH preamble are the symbols included within the non-overlapping uplink frequency resource portions.

Clause 14. The user equipment of clause 13, wherein the valid ROs of the slots of the physical RACH which includes only the uplink symbol portion, and the slots of the physical RACH which include both non-overlapping uplink symbol portions and downlink symbol portions are indexed separately.

Clause 15. The user equipment of clause 13, wherein the valid ROs of the slots of the physical RACH which includes only the uplink symbol portion, and the slots of the physical RACH which include both non-overlapping uplink symbol portions and downlink symbol portions are indexed jointly.

Clause 16. The user equipment of any preceding clause, wherein the at least one of the first RACH configuration definitions included as part of the RACH configuration message is separate from the at least one of the second RACH configuration definitions included as part of the RACH configuration message.

Clause 17. A processor for wireless communication, comprising: at least one controller coupled with at least one memory and configured to cause the processor to: receive a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion; where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; and transmit a physical RACH preamble on a selected RO, which occurs in the non-overlapping uplink frequency resource portions of the physical RACH slot.

Clause 18. The processor of clause 17, wherein the slots of the physical RACH which include both non-overlapping uplink frequency resource portions and downlink frequency resource portions are slots of a random access channel, which include non-overlapping subband full duplex (SBFD) symbols.

Clause 19. The processor of clause 18, wherein the at least one of the first RACH configuration definitions include an ssb-perRACH-OccasionAndCB-PreamblesPerSSB for SBFD symbols.

Clause 20. The processor of clause 18, wherein the RACH configuration message includes at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

Clause 21. The processor of clause 20, wherein the RACH configuration message includes the set of subframe numbers, which override any previously configured set of subframe numbers, such as subframe numbers in Table 6.3.3.2-3 in TS 38.211 used to determine time resources of SBFD slots.

Clause 22. The processor of clause 20, wherein the RACH configuration message includes the set of subframe numbers, which are appended to any previously configured set of subframe numbers, such as subframe numbers in Table 6.3.3.2-3 in TS 38.211 used to determine time resources of SBFD slots.

Clause 23. The processor of clause 20, wherein the RACH configuration message includes the set of slot numbers, which override any previously configured set of slot numbers, such as slot numbers in Table 6.3.3.2-4 in TS 38.211 used to determine time resources of SBFD slots.

Clause 24. The processor of clause 20, wherein the RACH configuration message includes the set of slot numbers, which are appended to any previously configured set of slot numbers, such as slot numbers in Table 6.3.3.2-4 in TS 38.211 used to determine time resources of SBFD slots.

Clause 25. The processor of clause 20, wherein the msg1-FrequencyStart for SBFD symbols is indicated relative to a physical resource block (PRB) 0 of a configured UL bandwidth part (BWP) or a configured SBFD UL subband; is indicated relative to msg1-Frequency Start for UL-only symbols; or is preconfigured.

Clause 26. The processor of clause 20, wherein the msg1-FDM for SBFD symbols is determined implicitly by the UE as a relative value to the msg1-FDM for UL-only symbols, or as a relative value to an SBFD UL subband size.

Clause 27. The processor of clause 20, wherein the msgA-RO-FrequencyStart for SBFD symbols is indicated relative to a physical resource block (PRB) 0 of a configured UL bandwidth part (BWP) or a configured SBFD UL subband; is indicated relative to msgA-RO-FrequencyStart for UL-only symbols; or is preconfigured.

Clause 28. The processor of clause 20, wherein the msgA-RO-FDM for SBFD symbols is determined implicitly by the UE as a relative value to the msgA-RO-FDM for UL-only symbols, or as a relative value to an SBFD UL subband size.

Clause 29. The processor of clause 20, wherein the valid ROs of SBFD symbols for use with a physical RACH preamble are the symbols included within the non-overlapping uplink frequency resource portions.

Clause 30. The processor of clause 29, wherein the valid ROs of the slots of the physical RACH which includes only the uplink symbol portion, and the slots of the physical RACH which include both non-overlapping uplink symbol portions and downlink symbol portions are indexed separately.

Clause 31. The processor of clause 29, wherein the valid ROs of the slots of the physical RACH which includes only the uplink symbol portion, and the slots of the physical RACH which include both non-overlapping uplink symbol portions and downlink symbol portions are indexed jointly.

Clause 32. The processor of any preceding clause, wherein the at least one of the first RACH configuration definitions included as part of the RACH configuration message is separate from the at least one of the second RACH configuration definitions included as part of the RACH configuration message.

Clause 33. A method performed by a user equipment, the method comprising: receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion; wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; and transmitting a physical RACH preamble on a selected RO, which occurs in the non-overlapping uplink frequency resource portions of the physical RACH slot.

Clause 34. The method of clause 33, wherein the slots of the physical RACH which include both non-overlapping uplink frequency resource portions and downlink frequency resource portions are slots of a random access channel, which include non-overlapping subband full duplex (SBFD) symbols.

Clause 35. The method of clause 34, wherein the at least one of the first RACH configuration definitions include an ssb-perRACH-OccasionAndCB-PreamblesPerSSB for SBFD symbols.

Clause 36. The method of clause 34, wherein the RACH configuration message includes at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

Clause 37. The method of clause 36, wherein the RACH configuration message includes the set of subframe numbers, which override any previously configured set of subframe numbers, such as subframe numbers in Table 6.3.3.2-3 in TS 38.211 used to determine time resources of SBFD slots.

Clause 38. The method of clause 36, wherein the RACH configuration message includes the set of subframe numbers, which are appended to any previously configured set of subframe numbers, such as subframe numbers in Table 6.3.3.2-3 in TS 38.211 used to determine time resources of SBFD slots.

Clause 39. The method of clause 36, wherein the RACH configuration message includes the set of slot numbers, which override any previously configured set of slot numbers, such as slot numbers in Table 6.3.3.2-4 in TS 38.211 used to determine time resources of SBFD slots.

Clause 40. The method of clause 36, wherein the RACH configuration message includes the set of slot numbers, which are appended to any previously configured set of slot numbers, such as slot numbers in Table 6.3.3.2-4 in TS 38.211 used to determine time resources of SBFD slots.

Clause 41. The method of clause 36, wherein the msg1-Frequency Start for SBFD symbols is indicated relative to a physical resource block (PRB) 0 of a configured UL bandwidth part (BWP) or a configured SBFD UL subband; is indicated relative to msg1-Frequency Start for UL-only symbols; or is preconfigured.

Clause 42. The method of clause 36, wherein the msg1-FDM for SBFD symbols is determined implicitly by the UE as a relative value to the msg1-FDM for UL-only symbols, or as a relative value to an SBFD UL subband size.

Clause 43. The method of clause 36, wherein the msgA-RO-FrequencyStart for SBFD symbols is indicated relative to a physical resource block (PRB) 0 of a configured UL bandwidth part (BWP) or a configured SBFD UL subband; is indicated relative to msgA-RO-FrequencyStart for UL-only symbols; or is preconfigured.

Clause 44. The method of clause 36, wherein the msgA-RO-FDM for SBFD symbols is determined implicitly by the UE as a relative value to the msgA-RO-FDM for UL-only symbols, or as a relative value to an SBFD UL subband size.

Clause 45. The method of clause 36, wherein the valid ROs of SBFD symbols for use with a physical RACH preamble are the symbols included within the non-overlapping uplink frequency resource portions.

Clause 46. The method of clause 45, wherein the valid ROs of the slots of the physical RACH which includes only the uplink symbol portion, and the slots of the physical RACH which include both non-overlapping uplink symbol portions and downlink symbol portions are indexed separately.

Clause 47. The method of clause 45, wherein the valid ROs of the slots of the physical RACH which includes only the uplink symbol portion, and the slots of the physical RACH which include both non-overlapping uplink symbol portions and downlink symbol portions are indexed jointly.

Clause 48. The method of any preceding clause 33, wherein the at least one of the first RACH configuration definitions included as part of the RACH configuration message is separate from the at least one of the second RACH configuration definitions included as part of the RACH configuration message.

Clause 49. A network equipment, comprising: at least one memory; and at least one processor coupled with the at least one memory and configured to cause the network equipment to: formulate a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion; where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; transmit the random access channel (RACH) configuration message to a user equipment (UE); and receive a physical RACH preamble on a selected RO from the UE, which occurs in the non-overlapping uplink frequency resource portions of the physical RACH slot.

Clause 50. The network equipment of clause 49, wherein the slots of the physical RACH which include both non-overlapping uplink frequency resource portions and downlink frequency resource portions are slots of a random access channel, which include non-overlapping subband full duplex (SBFD) symbols.

Clause 51. The network equipment of clause 50, wherein the at least one of the first RACH configuration definitions include an ssb-perRACH-OccasionAndCB-PreamblesPerSSB for SBFD symbols.

Clause 52. The network equipment of clause 50, wherein the RACH configuration message includes at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

Clause 53. The network equipment of clause 52, wherein the RACH configuration message includes the set of subframe numbers, which override any previously configured set of subframe numbers, such as subframe numbers in Table 6.3.3.2-3 in TS 38.211 used to determine time resources of SBFD slots.

Clause 54. The network equipment of clause 52, wherein the RACH configuration message includes the set of subframe numbers, which are appended to any previously configured set of subframe numbers, such as subframe numbers in Table 6.3.3.2-3 in TS 38.211 used to determine time resources of SBFD slots.

Clause 55. The network equipment of clause 52, wherein the RACH configuration message includes the set of slot numbers, which override any previously configured set of slot numbers, such as slot numbers in Table 6.3.3.2-4 in TS 38.211 used to determine time resources of SBFD slots.

Clause 56. The network equipment of clause 52, wherein the RACH configuration message includes the set of slot numbers, which are appended to any previously configured set of slot numbers, such as slot numbers in Table 6.3.3.2-4 in TS 38.211 used to determine time resources of SBFD slots.

Clause 57. The network equipment of clause 52, wherein the msg1-FrequencyStart for SBFD symbols is indicated relative to a physical resource block (PRB) 0 of a configured UL bandwidth part (BWP) or a configured SBFD UL subband; is indicated relative to msg1-FrequencyStart for UL-only symbols; or is preconfigured.

Clause 58. The network equipment of clause 52, wherein the msg1-FDM for SBFD symbols is determined implicitly by the UE as a relative value to the msg1-FDM for UL-only symbols, or as a relative value to an SBFD UL subband size.

Clause 59. The network equipment of clause 52, wherein the msgA-RO-FrequencyStart for SBFD symbols is indicated relative to a physical resource block (PRB) 0 of a configured UL bandwidth part (BWP) or a configured SBFD UL subband; is indicated relative to msgA-RO-FrequencyStart for UL-only symbols; or is preconfigured.

Clause 60. The network equipment of clause 52, wherein the msgA-RO-FDM for SBFD symbols is determined implicitly by the UE as a relative value to the msgA-RO-FDM for UL-only symbols, or as a relative value to an SBFD UL subband size.

Clause 61. The network equipment of clause 52, wherein the valid ROs of SBFD symbols for use with a physical RACH preamble are the symbols included within the non-overlapping uplink frequency resource portions.

Clause 62. The network equipment of clause 61, wherein the valid ROs of the slots of the physical RACH which includes only the uplink symbol portion, and the slots of the physical RACH which include both non-overlapping uplink symbol portions and downlink symbol portions are indexed separately.

Clause 63. The network equipment of clause 61, wherein the valid ROs of the slots of the physical RACH which includes only the uplink symbol portion, and the slots of the physical RACH which include both non-overlapping uplink symbol portions and downlink symbol portions are indexed jointly.

Clause 64. The method of any preceding clause, wherein the at least one of the first RACH configuration definitions included as part of the RACH configuration message is separate from the at least one of the second RACH configuration definitions included as part of the RACH configuration message.

Clause 65. A processor, comprising: at least one controller coupled with at least one memory and configured to cause the processor to: formulate a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion; where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; transmit the random access channel (RACH) configuration message to a user equipment (UE); and receive a physical RACH preamble on a selected RO from the UE, which occurs in the non-overlapping uplink frequency resource portions of the physical RACH slot.

Clause 66. A method performed by a network equipment, the method comprising: formulating a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion; wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; transmitting the random access channel (RACH) configuration message to a user equipment (UE); and receiving a physical RACH preamble on a selected RO from the UE, which occurs in the non-overlapping uplink frequency resource portions of the physical RACH slot.

**Claims**

1. A user equipment for wireless communication, comprising:

at least one memory; and
at least one processor coupled with the at least one memory and configured to cause the user equipment to:

receive a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion;
where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; and
transmit a physical RACH preamble on a selected RO, which occurs in the non-overlapping uplink frequency resource portions of the physical RACH slot.

2. The user equipment of claim 1, wherein the slots of the physical RACH which include both non-overlapping uplink frequency resource portions and downlink frequency resource portions are slots of a random access channel, which include non-overlapping subband full duplex (SBFD) symbols.

3. The user equipment of claim 2, wherein the at least one of the first RACH configuration definitions include an ssb-perRACH-OccasionAndCB-PreamblesPerSSB for SBFD symbols.

4. The user equipment of claim 2, wherein the RACH configuration message includes at least one of a msg1-Frequency Division Multiplexed (FDM) for SBFD symbols, a msgA-RO-FDM for SBFD symbols, a msg1-FrequencyStart for SBFD symbols, a msgA-RO-FrequencyStart for SBFD symbols, a msg1-FDM for Uplink (UL)-only symbols, a msg1-FrequencyStart for UL-only symbols, a physical RACH configuration index for SBFD symbols, a physical RACH configuration for UL-only symbols, a set of subframe numbers, and a set of slot numbers.

5. The user equipment of claim 4, wherein the RACH configuration message includes the set of subframe numbers, which override any previously configured set of subframe numbers, such as subframe numbers in Table 6.3.3.2-3 in TS 38.211 used to determine time resources of SBFD slots.

6. The user equipment of claim 4, wherein the RACH configuration message includes the set of subframe numbers, which are appended to any previously configured set of subframe numbers, such as subframe numbers in Table 6.3.3.2-3 in TS 38.211 used to determine time resources of SBFD slots.

7. The user equipment of claim 4, wherein the RACH configuration message includes the set of slot numbers, which override any previously configured set of slot numbers, such as slot numbers in Table 6.3.3.2-4 in TS 38.211 used to determine time resources of SBFD slots.

8. The user equipment of claim 4, wherein the RACH configuration message includes the set of slot numbers, which are appended to any previously configured set of slot numbers, such as slot numbers in Table 6.3.3.2-4 in TS 38.211 used to determine time resources of SBFD slots.

9. The user equipment of claim 4, wherein the msg1-FrequencyStart for SBFD symbols is indicated relative to a physical resource block (PRB) 0 of a configured UL bandwidth part (BWP) or a configured SBFD UL subband; is indicated relative to msg1-FrequencyStart for UL-only symbols; or is preconfigured.

10. The user equipment of claim 4, wherein the msg1-FDM for SBFD symbols is determined implicitly by the UE as a relative value to the msg1-FDM for UL-only symbols, or as a relative value to an SBFD UL subband size.

11. The user equipment of claim 4, wherein the msgA-RO-FrequencyStart for SBFD symbols is indicated relative to a physical resource block (PRB) 0 of a configured UL bandwidth part (BWP) or a configured SBFD UL subband; is indicated relative to msgA-RO-FrequencyStart for UL-only symbols; or is preconfigured.

12. A processor for wireless communication, comprising:
    at least one controller coupled with at least one memory and configured to cause the processor to:

    receive a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion;
    where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; and
    transmit a physical RACH preamble on a selected RO, which occurs in the non-overlapping uplink frequency resource portions of the physical RACH slot.

13. A method performed by a user equipment, the method comprising:

    receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion;
    wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot; and
    transmitting a physical RACH preamble on a selected RO, which occurs in the non-overlapping uplink frequency resource portions of the physical RACH slot.

14. A network equipment, comprising:

    at least one memory; and
    at least one processor coupled with the at least one memory and configured to cause the network equipment to:

    formulate a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion;
    where the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot;
    transmit the random access channel (RACH) configuration message to a user equipment (UE); and
    receive a physical RACH preamble on a selected RO from the UE, which occurs in the non-overlapping uplink frequency resource portions of the physical RACH slot.

15. A method performed by a network equipment, the method comprising:

    formulating a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion;
    wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot;

transmitting the random access channel (RACH) configuration message to a user equipment (UE); and receiving a physical RACH preamble on a selected RO from the UE, which occurs in the non-overlapping uplink frequency resource portions of the physical RACH slot.

FIG. 1

EP 4 629 733 A1

200

| PRACH Configuration Index | Preamble format | $n_f$ mod x= y | | Subframe number | Starting symbol | number of PRACH slots within a subframe | $N_t^{RA, slot}$, number of time-domain PRACH occasions within a PRACH slot | $N_{dur,}^{RA}$ PRACH duration |
|---|---|---|---|---|---|---|---|---|
| | | x | y | | | | | |
| 118 | A3 | 2 | 1 | 2,3,4,7,8,9 | 0 | 1 | 2 | 6 |

FIG. 2

FIG. 3

FIG. 4

FIG. 5

SSB#0    SSB#1    SSB#2    SSB#3    SSB#4    SSB#5    SSB#6    SSB#7

UE Avoids Transmitting PRACH On These ROs

A First ssb-perRACH-OccasionAndCB-PreamblesPerSSB
(e.g., ssb-perRACH-Occasion=4)

A Second ssb-perRACH-OccasionAndCB-PreamblesPerSSB
(e.g., ssb-perRACH-Occasion=1)

FIG. 6

FIG. 7

FIG. 8

Processor

**906**

902

900

904

Controller

Memory

ALU(s)

| ALU | ALU | ALU | ALU |
| ALU | ALU | ALU | ALU |
| ALU | ALU | ALU | ALU |
| ALU | ALU | ALU | ALU |
| ALU | ALU | ALU | ALU |

FIG. 9

Network Equipment

1002 — Processor

1004 — Memory

1000 —

1006 — Controller

Transceiver     1012

1008 — Receiver Chain(s)     Transmitter Chain(s)
1010 —

FIG. 10

1100

( Start )

1102 — Receiving a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion

1104 — Wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot

1106 — Transmitting a physical RACH preamble on a selected RO, which occurs in the non-overlapping uplink frequency resource portions of the physical RACH slot

FIG. 11

**1200**

**Start**

**1202** — Formulating a random access channel (RACH) configuration message, where the RACH configuration message includes at least one of first RACH configuration definitions for use with slots of a physical RACH which include both non-overlapping uplink frequency resource portions and downlink frequency resource portions, and at least one of second RACH configuration definitions for use with slots of a physical RACH which includes only an uplink frequency resource portion

**1204** — Wherein the physical RACH has multiple associated Synchronization Signal/physical broadcast channel Block (SSB) indexes, where the first RACH configuration defines at least one RACH occasion (RO) corresponding to each of the associated SSB indexes, which occurs in the non-overlapping uplink frequency resource portions of the physical RACH slot

**1206** — Transmitting the random access channel (RACH) configuration message to a user equipment (UE)

**1208** — Receiving a physical RACH preamble on a selected RO from the UE, which occurs in the non-overlapping uplink frequency resource portions of the physical RACH slot

FIG. 12

Europäisches
Patentamt

European
Patent Office

Office européen
des brevets

# EUROPEAN SEARCH REPORT

**Application Number**

EP 25 16 5025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRAVJYOT SINGH DEOGUN ET AL: "Discussion on random access for subband non-overlapping full duplex", 3GPP DRAFT; R1-2400803; TYPE DISCUSSION; NR_DUPLEX_EVO-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052568580, Retrieved from the Internet: URL:https://www.3gpp.org/ftp/TSG_RAN/WG1_RL1/TSGR1_116/Docs/R1-2400803.zip R1-2400803 Discussion on random access for subband non-overlapping full duplex.docx [retrieved on 2024-02-19] | 1-4,9, 10,12-15 | INV. H04W74/00  ADD. H04L5/14 H04W74/0833 |
| Y | * chapters 1, 2.1.1 on page 4, chapter 2.1.2 on page 5 * * figures 1, 2 * ----- | 5-8,11 | **TECHNICAL FIELDS SEARCHED (IPC)** H04W H04L |
| X | WO 2024/035329 A1 (ERICSSON TELEFON AB L M [SE]) 15 February 2024 (2024-02-15) * page 5 lines 18-20, page 12 line 10 to page 13 line 16 * * figures 7, 8 * ----- -/-- | 1,12-15 | |

The present search report has been drawn up for all claims

| Place of search | Date of completion of the search | Examiner |
|---|---|---|
| The Hague | 23 May 2025 | Metozounve, Emeline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

**Application Number**

EP 25 16 5025

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PETER GAAL ET AL: "SBFD Random Access Operation", 3GPP DRAFT; R1-2401441; TYPE DISCUSSION; NR_DUPLEX_EVO-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, GR; 20240226 - 20240301 19 February 2024 (2024-02-19), XP052569201, Retrieved from the Internet: URL:https://www.3gpp.org/ftp/TSG_RAN/WG1_RL1/TSGR1_116/Docs/R1-2401441.zip R1-2401441 SBFD random access operation.docx [retrieved on 2024-02-19] | 5-8 | |
| A | * chapter 2.2 on pages 4 and 5 * * figures 2-2, 2-4 * | 1-4,9-15 | |

-----

-/--

**TECHNICAL FIELDS SEARCHED (IPC)**

The present search report has been drawn up for all claims

| Place of search | Date of completion of the search | Examiner |
|---|---|---|
| The Hague | 23 May 2025 | Metozounve, Emeline |

EPO FORM 1503 03.82 (P04C01)

**EUROPEAN SEARCH REPORT**

| Category | Citation of document with indication, where appropriate, of relevant passages | Relevant to claim | CLASSIFICATION OF THE APPLICATION (IPC) |
|---|---|---|---|
| Y | ERICSSON: "Introduction of extensions to 71 GHz", 3GPP DRAFT; R1-2112431, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. e-meeting; 20211011 - 20211019 10 November 2021 (2021-11-10), XP052097764, Retrieved from the Internet: URL:https://ftp.3gpp.org/tsg_ran/WG1_RL1/T SGR1_107-e/Docs/R1-2112431.zip R1-2112431 draft CR 38.211 NR_ext_to_71GHz-Core.docx [retrieved on 2021-11-10] | 11 | |
| A | * chapter 6.3.3.2 on page 21 * | 1-10, 12-15 | |

----- 

TECHNICAL FIELDS SEARCHED (IPC)

The present search report has been drawn up for all claims

| Place of search | Date of completion of the search | Examiner |
|---|---|---|
| The Hague | 23 May 2025 | Metozounve, Emeline |

EPO FORM 1503 03.82 (P04C01)

page 3 of 3

**EP 4 629 733 A1**

## ANNEX TO THE EUROPEAN SEARCH REPORT
## ON EUROPEAN PATENT APPLICATION NO.

EP 25 16 5025

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | Publication date | Patent family member(s) | Publication date |
|---|---|---|---|
| WO 2024035329 A1 | 15-02-2024 | CN 119999319 A<br>WO 2024035329 A1 | 13-05-2025<br>15-02-2024 |

EPO FORM P0459

For more details about this annex : see Official Journal of the European Patent Office, No. 12/82

**EP 4 629 733 A1**

## REFERENCES CITED IN THE DESCRIPTION

### Non-patent literature cited in the description

- *38.211 V18.1.0*, December 2023